# EUROPÄISCHE PATENTSCHRIFT

(11) **EP 1 478 564 B1**
(45) Veröffentlichungstag und Bekanntmachung des Hinweises auf die Patenterteilung: **28.03.2007**
(21) Anmeldenummer: 02806848.4
(22) Anmeldetag: 20.02.2002
(51) Int. Cl.: B62D 65/00, B65G 49/04

(54) **VORRICHTUNG UND VERFAHREN ZUR BEHANDLUNG VON WERKSTÜCKEN, INSBESONDERE FAHRZEUGKAROSSEN**
DEVICE AND METHOD FOR HANDLING WORKPIECES IN PARTICULAR VEHICLE CHASSIS
DISPOSITIF ET PROCEDE POUR LE TRAITEMENT DE PIECES A USINER, NOTAMMENT DE CAISSES DE VEHICULES

(43) Veröffentlichungstag der Anmeldung: 24.11.2004
(60) Teilanmeldung: 06002288.6
(73) Patentinhaber: Dürr Systems GmbH, 70435 Stuttgart (DE)
(72) Erfinder: KREUZER, Bernd, 36341 Lauterbach (DE); FÖTTINGER, Manfred, 35390 Giessen (DE)
(74) Vertreter: HOFFMANN EITLE
(86) Internationale Anmeldenummer: PCT/EP2002/001782
(87) Internationale Veröffentlichungsnummer: WO 2003/070545

(56) Entgegenhaltungen:
- EP-A- 0 030 882
- EP-A- 1 020 347
- DE-A- 3 906 857
- DE-A- 19 641 048
- GB-A- 2 225 294
- US-A- 4 928 383

## Beschreibung

### Gebiet der Erfindung

Die Erfindung betrifft eine Vorrichtung sowie ein Verfahren zur Behandlung von Werkstücken, insbesondere Fahrzeugkarossen.

Eine derartige Anlage umfasst eine Behandlungsstrecke mit einem oder mehreren Behandlungsbereichen, in denen die Werkstücke zur Behandlung eingebracht werden.

Ein Behandlungsbereich kann beispielsweise ein Tauchbecken mit einer Behandlungsflüssigkeit sein, doch ist unter dem Begriff Behandlungsbereich auch jede andere Art von Kabine oder Becken zu verstehen, wenn hierin an dem Werkstück eine Behandlung vorgenommen wird. Eine derartige Behandlung kann zum Beispiel auch einen Waschvorgang umfassen. Andere Beispiele für Behandlungen sind eine Tauchphosphatierung, Vorbehandlung für eine Tauchlackierung, Pulverbeschichtung, Nasslackbeschichtung und ähnliches.

### Stand der Technik

Bisher bekannte Vorrichtungen zur Oberflächenbehandlung von Werkstücken wie Fahrzeugkarosserien in Tauchbädern oder Behandlungskabinen werden in kontinuierlich fördernde Vorrichtungen sowie nicht kontinuierlich fördernde Vorrichtungen unterteilt.

Bei kontinuierlich fördernden Anlagen werden die Karosserien in einem Gehänge befestigt und mit einem Kettenantrieb entlang der Behandlungsstrecke gefördert, in die Tauchbäder abgesenkt, durch die Tauchbäder gefördert und wieder aus den Tauchbädern gehoben. Eine kontinuierlich fördernde Anlage zur Oberflächenbehandlung von Fahrzeugkarossen ist in der DE 196 41 048 A1 beschrieben. Bei dieser Vorrichtung werden die Fahrzeugkarossen jeweils von Drehgestellen gehalten, die in festem Abstand zueinander mit gleichbleibender Geschwindigkeit mit Hilfe einer gemeinsamen Fördereinrichtung oberhalb mehrerer Behandlungsbecken verfahren werden. Das Ein- und Ausbringen der Fahrzeugkarossen in bzw. aus den Tauchbädern erfolgt durch eine gezielte Drehbewegung, die über Leitschienen mit der Translationsbewegung der Drehgestelle starr gekoppelt sein kann. Die Drehgestelle werden durch ein umlaufendes Kettensystem geführt und somit sowohl im Bereich der Behandlungsstrecke über den Tauchbädern wie auch beim Rücktransport starr zueinander und mit kontinuierlicher Geschwindigkeit geführt.

In der Technik sind auch nicht-kontinuierlich fördernde Anlagen bekannt, die als Taktanlagen bezeichnet werden. Bei Taktanlagen werden die Fahrzeugkarossen auf Objektträgern über die Tauchbecken gefahren, dort gestoppt und mit Hilfe von Hebevorrichtungen, wie beispielsweise über Hebeanlagen oder Drehvorrichtungen, in das Behandlungsbad eingetaucht und nach der Prozesszeit wieder herausgehoben bzw. herausgedreht.

Ein Beispiel für eine derartige Anlage ist die DE 43 04 145 C1 oder aber die DE-U-200 22 634.7.

Die Wahl zwischen einer kontinuierlich fördernden Vorrichtung und einer nicht kontinuierlich fördernden Vorrichtung muss unter Berücksichtigung der spezifischen Vor- und Nachteile beider Grundkonzepte getroffen werden. So sind die kontinuierlich fördernden Vorrichtung zuverlässiger, da die Anlage mit wenigen Antriebsmotoren läuft, während die individuell getakteten Objektträger von Taktanlagen durch mehrere einzeln gesteuerte Motoren eine erhöhte Ausfallwahrscheinlichkeit besitzen. Auch ist der maximale Durchsatz von Werkstücken pro Zeiteinheit bei den kontinuierlichen Vorrichtungen höher als bei den Taktanlagen. Der Vorteil der Taktanlagen liegt hingegen in der hohen Flexibilität der Werkstückbehandlung durch die Möglichkeit der Einzelansteuerung der einzelnen Objektträger.

Im Automobilsektor ist man bestrebt, die Anlagen mit hohen Durchsätzen zu betreiben. Gleichzeitig ist aber auch eine hohe Flexibilität des Prozesses erwünscht, da eine einmal in einem Automobilwerk aufgebaute Anlage möglicherweise in der Zukunft unterschiedliche Aufgaben der Werkstückbehandlung leisten soll.

Die EP 0030882 betrifft eine Transportvorrichtung für die Montage von Fahrzeugkarosserien, wobei unter Verwendung der Transportvorrichtung mindestens zwei unterschiedliche Typen an Montagehilfen transportierbar sind, welche jeweils ausgebildet sind, um unterschiedliche Karosserieteile aufzunehmen. Die Transportvorrichtung umfasst mindestens eine Montagelinie zur Vorwärtsbewegung der Montagehilfen sowie eine Rückfuhrlinie, welche die leeren Montagehilfen rückführt. Zudem ist eine weitere Linie zum lagern der Montagehilfen vorgesehen.

Die US 4928383A zeigt ein nicht kontinuierlich arbeitendes Montagesystem, wobei ein Teil oder Produkt durch eine Reihe an Behandlungsstationen transportiert wird. Jede Behandlungsstation ist zum einen zur Durchführung einer bestimmten Behandlung auswählbar und zum anderen so programmierbar, dass die Behandlung durchgeführt wird oder nicht. Dadurch kann ein Teil, welches das Montagesystem durchläuft, an einer bestimmten Behandlungsstation bearbeitet oder nicht bearbeitet werden. Dadurch lassen sich eine Vielzahl verschiedener Modelle durch ein Montagesystem bearbeiten.

Aus der DE 3906857A1 ist eine Transporteinrichtung mit L-förmigen Hänger bekannt, wobei der L-förmige Hänger von einem hängenden Fördermittel herunterhängt. Durch den L-förmigen Hänger sind beispielsweise Fahrzeugkarosserien kontinuierlich förderbar.

Aus der EP 1020347A ist ein Verfahren und eine Vorrichtung gemäß dem Oberbegriff des Anspruchs 1 zur Förderung von Werkstücken bekannt, umfassend eine Schiene zur Beförderung von Laufwägen mit daran angeordneten Karosserien sowie eine Rücklaufschiene zur Rückführung der Laufwägen ohne darin befindliche Werkstücke. An beiden Enden der Förderschiene sind Auswahlschienen angeordnet, welche zwischen einer horizontalen Position, welche sich entlang der Förderschienen erstreckt, und einer vertikalen Position, welche sich entlang der Rückfuhrschienen erstreckt, verschenkbar sind. Die Auswahlschienen werden zu einem Transport der Laufwägen zwischen der Förderschiene und der Rückfuhrschiene verschwenkt.

GB 2225294A betrifft ein Verfahren zum Transport von Fahrzeugkarosserien entlang einer Bearbeitungslinie zum Schweißen. Die Bearbeitungslinie umfasst eine Bearbeitungsstation A, in welcher die Fahrzeugkarosserie montiert werden kann, und eine Auslassstation B, welche unterhalb der Bearbeitungsstation angeordnet ist, wobei Überführungsmittel zwischen der Bearbeitungsstation und der Auslassstation hin und her bewegbar sind, so dass ein Fahrzeug zwischen der Bearbeitungsstation und der Auslassstation bewegbar ist. Die Bearbeitungslinie umfasst weiter Mittel zum Transport der Fahrzeugkarosserie von der Auslassstation zu einer daran anschließenden zusätzlichen Schweißlinie, wobei die Bearbeitungsstation und die Auslassstation über einen Abstand von einander entfernt sind, welcher größer ist als die Länge das zu schweißenden Fahrzeugs. Zwischen der Bearbeitungsstation und der Auslassstation ist eine Abzweigstation C vorgesehen, wobei eine Fahrzeugkarosserie auf einen Ersatzlaufwagen in eine Stand-by Position von der Hauptförderlinie bewegt werden kann.

### Darstellung der Erfindung

Der Erfindung liegt die Aufgabe zugrunde, eine Vorrichtung und ein Verfahren zur Behandlung von Werkstücken, insbesondere von Fahrzeugkarossen, zu entwickeln, welche die Vorteile eines hohen Durchsatzes mit dem Vorteil hoher Flexibilisierung vereint.

Diese Aufgabe wird durch eine Vorrichtung mit den Merkmalen des Anspruchs 1 sowie ein Verfahren mit den Merkmalen des Anspruchs 20 gelöst. Vorteilhafte Ausführungsformen der erfindungsgemäßen Vorrichtung sowie des erfindungsgemäßen Verfahrens finden sich in den übrigen Ansprüchen.

Der Erfindung liegt der Gedanke zugrunde, eine Vorrichtung zur Behandlung von Werkstücken, insbesondere Fahrzeugkarossen, in Modulbauweise auszugestalten. Ein erstes Modul umfasst eine Behandlungsstrecke mit einem oder mehreren Behandlungsbereichen, wie z.B. Tauchbädern, zur Oberflächenbehandlung der Werkstücke und eine Führungseinrichtung entlang der Behandlungsstrecke. Ein zweites Modul umfasst ein oder mehrere Fahrwerke, an denen die Werkstücke befestigbar sind und die entlang der Führungseinrichtung, d.h. entlang der Behandlungsstrecke, bewegbar sind.

Vorzugsweise sind verschiedene Typen von zweiten Modulen jeweils mit dem ersten Modul kombinierbar. So können Fahrwerke in der Vorrichtung eingesetzt werden, die selbst keine Antriebsmotoren besitzen und im wesentlichen in form der oben beschriebenen kontinuierlichen Vorrichtungen durch die Vorrichtung zwangsgeführt werden. Andererseits können aber auch Fahrwerke in der Vorrichtung eingesetzt werden, die einen eigenen Fahrantrieb und für die Bewegung der Werkstücke in die Tauchbäder, innerhalb der Tauchbäder und aus den Tauchbädern heraus auch gesonderte Drehantriebe aufweisen. Diese Fahrwerke in Kombination mit dem gleichbleibenden ersten Modul gewährleisten die Eigenschaften von Taktanlagen. Neben den beiden genannten Fahrwerken ähnlich den Haltegestellen bei kontinuierlich fördernden Anlagen und den Objektträgern von Taktanlagen sind aber auch Zwischenlösungen denkbar, die im folgenden als Hybridlösungen bezeichnet werden. So ist es beispielsweise denkbar, Fahrwerke in der erfindungsgemäßen Vorrichtung einzusetzen, die keinen eigenen Fahrantrieb besitzen und daher entlang der Behandlungsstrecke zwangsgeführt werden, wohingegen die Fahrwerke einen gesonderten Drehantrieb aufweisen und daher eine individuelle Steuerung der Drehbewegung bis hin zum "Überspringen" einzelner Behandlungsbereiche möglich ist. In umgekehrter Weise kann die erfindungsgemäße Vorrichtung auch mit Fahrwerken bestückt werden, die jeweils einen eigenen Fahrantrieb besitzen, bei denen aber die Drehbewegung wie bei der oben beschriebenen kontinuierlich fördernden Anlage nach DE 196 41 048 A1 an die Translationsbewegung der Fahrwerke zwangsgekoppelt ist. Derartige Hybrid-Lösungen liegen somit zwischen den oben beschriebenen Grundkonzepten einer kontinuierlich fördernden Vorrichtung und einer Taktanlage.

Für den Betreiber der erfindungsgemäßen Vorrichtung besteht somit die Möglichkeit, die gesamte Anlage mit geringem Aufwand zwischen einer kontinuierlich fördernden Anlage, einer Taktanlage und einer obengenannten Hybrid-Lösung umzurüsten. So kann beispielsweise bei der Verwendung der Vorrichtung zur Lackierung von Fahrzeugkarossen die Anlage kontinuierlich fördernd betrieben werden, solange ein maximaler Durchsatz bei hohen Stückzahlen erwünscht ist, während bei einer Verringerung der Produktionsmenge oder beim Auslaufen des entsprechenden Modells die Vorrichtung zu einer Taktanlage umgerüstet werden kann, indem lediglich ein unterschiedliches zweites Modul mit dem ersten, gleichbleibenden Grundmodul kombiniert wird.

Ein weiterer Vorteil der erfindungsgemäßen Vorrichtung liegt darin, dass sich im Rahmen einer Kleinserienfertigung durch die weitgehende Verwendung gemeinsamer Bauteile zwischen unterschiedlich konfigurierten Vorrichtungen die Herstellkosten verringern lassen.

Um eine wie oben beschriebene, flexible Lösung verwirklichen zu können, können die Fahrwerke nicht in der gesamten Anlage an einer umlaufenden Kette geführt werden, da dies dem Grundkonzept der taktenden Anlage sowie der Hybrid-Lösung mit eigenem Fahrantrieb widersprechen würde. Aus diesem Grund müssen die Fahrwerke so geführt werden, dass sie nur bei Bedarf im Bereich der Behandlungsstrecke gleichsam als starre Einheit zueinander geführt werden. Das erfindungsgemäße Verfahren zur Behandlung von Werkstücken, insbesondere Fahrzeugkarossen, zeichnet sich somit dadurch aus, dass die Werkstücke zunächst durch eine erste Fördereinrichtung zu einer ersten Übergabestation antransportiert werden, in der die Werkstücke mit den Fahrwerken verbunden werden. Hierzu wird ein Fahrwerk um eine Schwenkachse hochgeschwenkt, bis das Fahrwerk das Werkstück hält. Anschließend durchfährt das auf dem Fahrwerk gehaltene Werkstück die Behandlungsstrecke bis zu einer zweiten Übergabestation am Ende der Behandlungsstrecke, wobei eine zusätzliche, abschnittsweise Drehbewegung zum Ein- bzw. Ausbringen des Werkstückes in bzw. aus einem oder mehreren Behandlungsbereichen erfolgt. Nachdem das Werkstück die zweite Übergabestation erreicht hat, schwenkt das Fahrwerk um die Schwenkachse herunter und erfolgt gleichzeitig der Abtransport des Werkstückes durch eine zweite Fördereinrichtung. Die um etwa 90° aus der waagerechten verschwenkten Fahrwerke werden zur ersten Übertragungsstation zurücktransportiert.

Nach einer bevorzugten Ausführungsform ist die Führungseinrichtung nur auf einer Seite der Behandlungsstrecke angeordnet. Durch diese Maßnahme wird der für eine mögliche Wartung zugänglich zu machende Teil der Vorrichtung zusammengefasst und zudem Platz eingespart. Bei einer Konfigurierung der gesamten Vorrichtung hin zu einer kontinuierlich fördernden Anlage lassen sich zudem die Drehwellen zum in Drehung versetzen der Werkstücke kürzer ausbilden, da diese nur noch auf einer Seite der Fahrwerke angeordnet werden müssen.

Vorzugsweise umfasst die Führungseinrichtung mindestens eine Schiene. Dies stellt die einfachste Bauart einer Führungseinrichtung dar.

Bei dieser Ausführungsform weisen die Fahrwerke bevorzugt Rollen auf, die an der mindestens einen Schiene der Führungseinrichtung abrollen und gleichzeitig die Lage der Fahrwerke relativ zu den Schienen genau festlegen.

Nach einer bevorzugten Ausführungsform der Erfindung umfasst das erste Modul weiterhin eine Rückführeinrichtung, vorzugsweise in Form eines Gurtförderers oder Kettenförderers, zur Förderung der Fahrwerke von der zweiten Übergabestation zur ersten Übergabestation. Der Einsatz eines Gurtförderers stellt ein einfaches Konzept mit einer reibschlüssigen Aufnahme der Fahrwerke dar. Gurtförderer oder Kettenförderer erlauben die Rückführung der Fahrwerke in einer beliebigen Lage und mit einer Geschwindigkeit unabhängig von der durchschnittlichen Geschwindigkeit der Fahrwerke im Bereich der Behandlungsstrecke. Indem ein unabhängiges Rückführorgan vorgesehen ist, lässt sich die Flexibilität der gesamten Vorrichtung weiter erhöhen, und es lässt sich die Rückführeinrichtung als Puffer für Fahrwerke einsetzen.

Wenn die Rückführeinrichtung so abgestimmt ist, dass die Fahrwerke in kürzerer Zeitdauer von der zweiten Übergabestation zur ersten Übergabestation gefördert werden als die Fahrwerke von der ersten Übergabestation zur zweiten Übergabestation gefördert werden, müssen weniger Fahrwerke für eine Gesamtanlage eingesetzt werden. Im Falle von Fahrwerken, die einen eigenen Fahrantrieb besitzen, ist keine Fördereinrichtung im Bereich der Rückführung nötig, weil diese Fahrwerke selbstständig fahren. Durch die schnelle Rückführung müssen bei gleichbleibendem Durchsatz an zu behandelnden Werkstücken weniger Fahrwerke in der Vorrichtung eingesetzt werden, weil die Verweilzeit im Rücktransportbereich geringer ist.

Wie oben bereits im Zusammenhang mit dem erfindungsgemäßen Verfahren beschrieben wurde, ist die Vorrichtung so ausgestaltet, dass in der zweiten Übergabestation die Fahrwerke um eine Schwenkachse im Bereich der Führungseinrichtung um einen Winkel von etwa 90° verschwenkt werden und in der ersten Übergabestation die Fahrwerke in entgegengesetzter Schwenkrichtung um denselben Winkelbetrag zurückgeschwenkt werden. Diese Lösung weist den Vorteil auf, dass die Fahrwerke im Rahmen des Rücktransports nur einen geringen Platz in der Gesamtvorrichtung einnehmen. Dies rührt daher, weil die Fahrwerke neben den Behandlungsbädern hochkant zurücktransportiert werden können.

Je nach der Konfiguration der Anlage kann allerdings auch der Rücktransport der Fahrwerke hochkant oberhalb der Behandlungsstrecke erfolgen. Dies ist dann anzustreben, wenn die zu behandelnden Werkstücke, die von der ersten Fördereinrichtung zur ersten Übergabestation transportiert werden, von oben durch die Fahrwerke gegriffen werden sollen. Dann empfiehlt es sich, die Fahrwerke im Bereich der zweiten Übergabestation von den behandelnden Werkstücken nach oben zu verschwenken und entsprechend den Bereich der ersten Übergabestation nach unten an die zu behandelnden Werkstücke wieder heranzuführen. Nach der bevorzugten Ausführungsform der Erfindung erfolgt allerdings die Bewegung in genau umgekehrter Richtung. Die Fahrwerke werden im Bereich der zweiten Übergabestation gleichsam unter den Werkstücken weggeklappt, um etwa 90° um die Schwenkachse im Bereich der Führungseinrichtung verschwenkt, mit erhöhter Geschwindigkeit zur ersten Übergabestation zurückgefördert und dort wieder von unten an die zu behandelnden Werkstücke herangeschwenkt, bis diese von der Schwenkeinrichtung gehalten werden.

Vorzugsweise ist die Schwenkachse im wesentlichen parallel zur Führungseinrichtung und auf derjenigen Seite der Führungseinrichtung sowie der Fahrwerke angeordnet, die den einen oder den mehreren Behandlungsbereichen abgewandt ist. Durch die entsprechende Anordnung der Schwenkachse können die Fahrwerke so in die Rückführposition verschwenkt werden, dass diese während der Rückführung nicht mit der Führungseinrichtung oder den Fahrwerken auf der Behandlungsstrecke in Kollision treten.

Vorzugsweise sind die Fahrwerke und die Führungseinrichtung so aufgebaut, dass alle Lagerungen und Gelenke bei der Behandlung der Werkstücke jeweils außerhalb des einen oder der mehreren Behandlungsbereiche angeordnet sind. Bei einer Vielzahl der einleitend erwähnten Tauchbäder müssen entweder spezielle Abdichtmaßnahmen ergriffen werden, damit die Behandlungsflüssigkeiten nicht in die Lagerungen eindringen oder aber die Lebensdauer der Lagerungen und Gelenke verkürzt sich entsprechend. Daher ist eine entsprechende Anordnung der Lagerungen und Gelenke außerhalb der Behandlungsbereiche besonders bevorzugt.

Vorzugsweise umfassen die Fahrwerke einen äußeren Rahmen sowie einen inneren Rahmen, der relativ zum äußeren Rahmen um eine Drehachse drehbeweglich ist, wobei die Werkstücke am inneren Rahmen befestigbar sind. Durch diese Ausgestaltung können die Fahrwerke mit dem äußeren Rahmen entlang der Führungseinrichtung im Bereich der Behandlungsstrecke bewegt werden, während die auf den jeweiligen Behandlungsbereich abgestimmten komplexen Drehbewegungen nur durch den inneren Rahmen mit dem daran befestigten Werkstück durchgeführt werden. Diese Gestaltung besitzt insbesondere den Vorteil, dass bei der Verwendung von Fahrwerken, die eine kontinuierlich fördernde Anlage schaffen, die einzelnen Fahrwerke leicht miteinander gekoppelt werden können, da die äußeren Rahmen die komplexen Drehbewegungen der Werkstücke nicht mitmachen.

Nach einer bevorzugten Ausführungsform ist die Drehachse im wesentlichen horizontal sowie senkrecht zur Bewegungsrichtung der Fahrwerke entlang der Behandlungsstrecke angeordnet.

Eine kontinuierlich fördernde Anlage lässt sich durch die Auswahl spezieller Fahrwerke schaffen, die im Bereich der ersten Übergabestation aneinander koppelbar sind und im Bereich der zweiten Übergangsstation voneinander lösbar sind. Somit wird im Bereich der Behandlungsstrecke eine Förderung der Fahrwerke in vorgegebenem Abstand jeweils zueinander ermöglicht und die Fahrwerke können, gleichsam wie ein Eisenbahnzug, durch die Behandlungsstrecke gezogen oder geschoben werden. Gleichzeitig wird aber durch das Lösen der Fahrwerke voneinander im Bereich der zweiten Übergangsstation der oben erwähnte schnelle Rücktransport der Fahrwerke von der zweiten zur ersten Übergangsstation möglich und es lässt sich die Anzahl der insgesamt einzusetzenden Fahrwerke auch bei der kontinuierlich fördernden Anlage reduzieren.

Bei dieser Ausführungsform der Erfindung hat es sich als besonders vorteilhaft erwiesen, die äußeren Rahmen der Fahrwerke mit vorderen Kopplungselementen und hinteren Kopplungselementen auszustatten, die so gestaltet sind, dass das hintere Kopplungselement jedes Fahrwerks mit dem vorderen Kopplungselement eines nachfolgenden Fahrwerks eine lösbare Formschlussverbindung ausbilden kann. Durch diese Ausgestaltung muss kein Kettenspannen erfolgen und bei dem Verschwenkvorgang der Fahrwerke im Bereich der ersten Übergabestation und zweiten Übergabestation lassen sich die Fahrwerke auf einfache Weise miteinander verbinden und wieder voneinander lösen, indem eine nur in horizontaler Ebene wirkende Formschlussverbindung ausgebildet wird und bei einem Verschwenken der Fahrwerke um 90° nach unten oder nach oben die Kopplungselemente in die komplementär geformten Kopplungselemente eines benachbarten Fahrwerks einrücken können.

Weiterhin weisen die Fahrwerke nach einer bevorzugten Ausführungsform eine im Bereich des äußeren Rahmens angeordnete Verbindungseinrichtung, vorzugsweise einen hakenförmigen Ansatz, auf, mit dem eine Zugeinrichtung in Wirkverbindung treten kann. Eine derartige Zugeinrichtung oder Antriebseinrichtung ist vorteilhafterweise im Bereich der zweiten Übergabestation angeordnet und so gestaltet, um eine lösbare Verbindung mit der Verbindungseinrichtung desjenigen Fahrwerks auszubilden, das sich am nächsten zur zweiten Übergabestation im Bereich der Behandlungsstrecke befindet, wobei dieses Fahrwerk durch die Zugeinrichtung zur zweiten Übergabestation zwangsförderbar ist. Es wird somit gleichsam wie bei einer Eisenbahn das am nächsten zur zweiten Übergabestation im Bereich der Behandlungszone angeordnete Fahrwerk angekoppelt und mit der Zugeinrichtung zur zweiten Übergabestation zwangsgefördert, von wo aus das Werkstück von der zweiten Fördereinrichtung übernommen und abtransportiert wird und das Fahrwerk gleichzeitig vom Werkstück gelöst wird. Durch das Lösen des Fahrwerks vom Werkstück löst sich gleichzeitig die Verbindung mit sowohl der Zugeinrichtung wie auch die Kopplungsverbindung zu den nachfolgenden Fahrwerken im Bereich der Behandlungsstrecke. Deshalb muss die Zugeinrichtung daraufhin wieder von neuem eine Verbindung zu demjenigen Fahrwerk herstellen, dass sich am nächsten zur zweiten Übergabestation im Bereich der Behandlungsstrecke befindet. Diese Lösung ist sehr einfach und erlaubt eine kontinuierliche Förderung durch die beschrieben Pull-Technologie. Alternativ kann aber auch eine Schiebeeinrichtung eingesetzt werden, welche im Bereich der ersten Übergabestation angeordnet ist und die miteinander gekoppelten Fahrwerke in Richtung zur zweiten Übergabestation schiebt.

Vorzugsweise umfasst das zweite Modul weiterhin eine Steuereinrichtung im Bereich der Führungseinrichtung, die mit den Fahrwerken so zusammenwirkt, um eine relative Drehbewegung zwischen äußerem Rahmen und innerem Rahmen um die Drehachse zu steuern. Bei dieser Ausführungsform handelt es sich um eine kontinuierlich fördernde Variante oder aber eine der beiden möglichen Hybridvarianten, bei der die Fahrwerke keinen eigenen Drehantrieb besitzen. Mit der Translationsbewegung der Fahrwerke wird somit mit Hilfe der Führungseinrichtung die relative Drehbewegung zwischen äußerem Rahmen und innerem Rahmen gesteuert und das Eintauchen der Werkstücke in die Behandlungsbäder geführt.

Die Steuereinrichtung nach dieser Ausführungsform umfasst vorzugsweise eine Leitschiene mit geneigten Leitabschnitten, die mit einer drehstarr mit dem inneren Rahmen verbundenen Hebelanordnung zusammenwirkt. Diese Art der Steuereinrichtung ist einfach zu verwirklichen und weitgehend wartungsfrei, während eine kontrollierte und jederzeit gesteuerte Drehbewegung erzeugt werden kann.

Im Rahmen der erfindungsgemäßen Modulbauweise können die Fahrwerke einen Drehantrieb an jedem Fahrwerk besitzen, der ausgangsseitig drehstarr mit dem inneren Rahmen der Fahrwerke verbunden ist.

Darüber hinaus können die Fahrwerke sowohl einen Fahrantrieb zur translatorischen Bewegung der Fahrwerke entlang der Behandlungsstrecke als auch einen Drehantrieb zur Drehbewegung des inneren Rahmens relativ zum äußeren Rahmen aufweisen, wobei die translatorische Bewegung unabhängig von der Drehbewegung ist. Derartige Fahrwerke als Teil des zweiten Moduls machen die gesamte Vorrichtung zu einer Taktanlage.

Schließlich können die Fahrwerke eine Einrichtung zum Anheben oder Absenken der Drehachse zum Drehen des inneren Rahmens relativ zum äußeren Rahmen aufweisen. Dies kann auf eine beliebige, dem Fachmann bekannte Weise, z. B. über eine Kniehebelführung, erfolgen. Auch ist es möglich, die Drehachse zu verschwenken, indem diese alternativ oder zusätzlich zum Anheben oder Absenken noch schräggestellt wird.

Bei der Verwendung von Fahrwerken mit einem eigenen Fahrantrieb und/oder Drehantrieb erfolgt die Informationsübertragung und/oder Energieübertragung vom ersten Modul auf die Fahrwerke vorzugsweise berührungslos, insbesondere induktiv. Diese Lösung ist gegenüber der alternativen Lösung unter Verwendung von Schleifkontakten störungsunanfälliger.

### Kurze Beschreibung der Zeichnungen

Nachfolgend wird die Erfindung beispielhaft anhand der beiliegenden Figuren beschrieben in denen:
- Fig. 1: eine Übersichtsdarstellung einer erfindungsgemäßen Vorrichtung im Bereich der zweiten Übergabestation ist;
- Fig. 2: eine Schnittansicht durch die Vorrichtung im Bereich eines Behandlungsbades ist, wobei der Schnitt senkrecht zur Translationsrichtung angeordnet ist.
- Fig. 3: zeigt eine Ausführungsform für ein Fahrwerk ohne eigenen Antrieb;
- Fig. 4: zeigt ein Fahrwerk mit eigenem Drehantrieb, jedoch ohne eigenen Fahrantrieb;
- Fig. 5: zeigt ein Fahrwerk, das sowohl einen eigenen Drehantrieb wie auch Fahrantrieb aufweist;
- Fig. 6: zeigt schematisch einen Teil der erfindungsgemäßen Vorrichtung im Bereich der zweiten Übergabestation mit Fahrwerken entsprechend der Ausführungsform nach Fig. 3;
- Fig. 7: zeigt schematisch die Bewegung von Fahrzeugkarosserien unter Verwendung eines Fahrwerks gemäß Fig. 3;
- Fig. 8: ist eine Ansicht ähnlich zur Fig. 7 und zeigt schematisch eine erfindungsgemäße Vorrichtung mit Fahrwerken gemäß der Ausführungsform nach Fig. 3 im Bereich der Behandlungsbäder und der zweiten Übergabestation.
- Fig. 9: zeigt in einem Schnitt senkrecht zur Richtung der Translationsbewegung das Verschwenken der Fahrwerke im Bereich der ersten sowie zweiten Übergabestation;
- Fig. 10: zeigt einen Querschnitt durch den Tunnel der gesamten Anlage im Bereich einer Behandlungsstation, wobei wiederum Fahrwerke gemäß der Ausführungsform nach Fig. 3 eingesetzt werden;

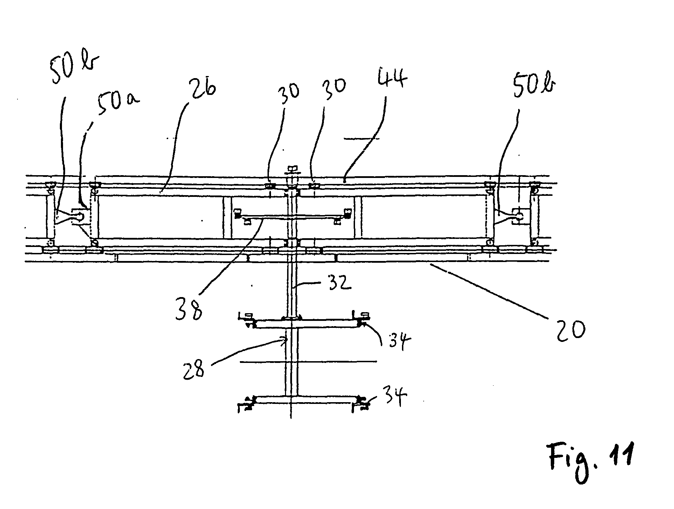

- Fig. 11: zeigt schematisch die Kopplungseinrichtungen zum miteinander koppeln der einzelnen Fahrwerke gemäß Fig. 3;
- Fig. 12: zeigt eine weitere Ausführungsform der Erfindung mit Fahrwerken gemäß Fig. 5, die sowohl einen eigenen Fahrantrieb wie auch eigenen Drehantrieb aufweisen;
- Fig. 13: zeigt eine Draufsicht auf einen derartigen Fahrantrieb mit eigenen Antriebseinheiten und
- Fig. 14: zeigt im Detail die Anordnung der Fahrantriebe bei der Ausführungsform nach Fig. 12 innerhalb der Anlage.

### Wege zur Ausführung der Erfindung

In den nachfolgenden Ausführungsformen der Erfindung werden jeweils dieselben Bauteile mit denselben Referenzziffern bezeichnet werden.

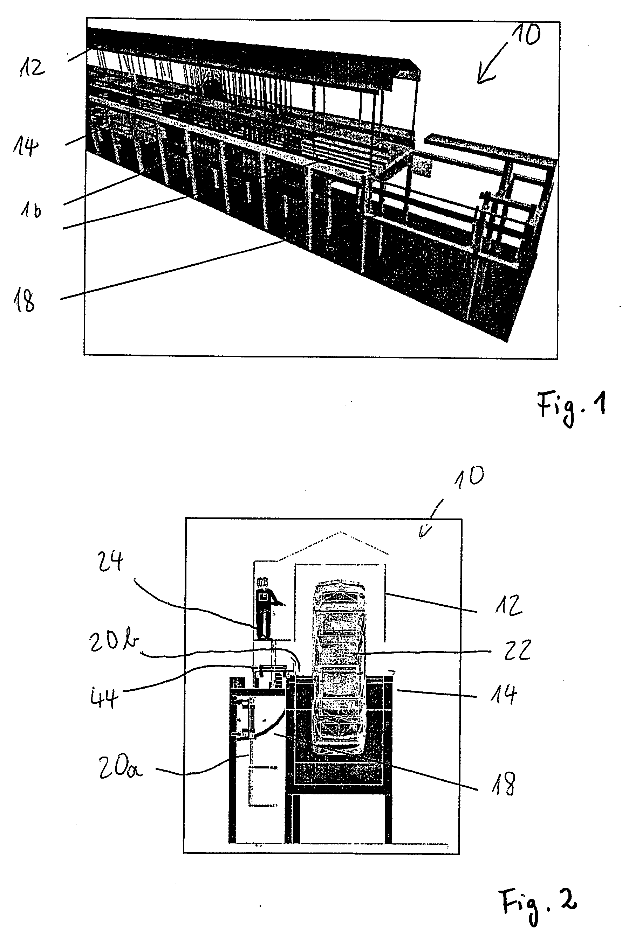

Fig. 1 zeigt eine schematische Ansicht einer erfindungsgemäßen Vorrichtung, die der Lackierung von Automobilkarosserien dient. Die Grundprinzipien der Vorrichtung sind aber auch auf andere Anlagen mit unterschiedlichen Behandlungsstationen zur Behandlung von Werkstücken in gleicher Weise anwendbar. Die gesamte Anlage 10, von der in Fig. 1 nur der ausgangsseitige Teil dargestellt ist, umfasst einen Tunnel 12 und eine Anzahl von Tanks 14, in denen sich eine Behandlungsflüssigkeit befindet und in die die zu behandelnden Werkstücke einzutauchen sind. Neben Führungen 16 ist in Fig. 1 eine zweite Übergabestation 18 dargestellt, in welcher die Werkstücke, die durch eigene Fahrwerke (nicht dargestellt) gehalten die Anlage nach Fig. 1 in der Zeichenebene von links nach rechts durchlaufen haben, an eine nachgeschaltete Fördereinrichtung abgegeben werden.

Die in Fig. 1 dargestellten Hauptkomponenten der Anlage, wie Tunnel, Tanks und Führung mit Übergabestation sind Teile der modular aufgebauten Anlage, die bei allen nachfolgend diskutierten unterschiedlichen Konfigurationen der Gesamtanlage gemeinsam vorhanden sind und als erstes Modul bezeichnet werden. Es handelt sich somit gleichsam um die Basiskomponenten des nachfolgend eingehender beschriebenen Baukastensystems.

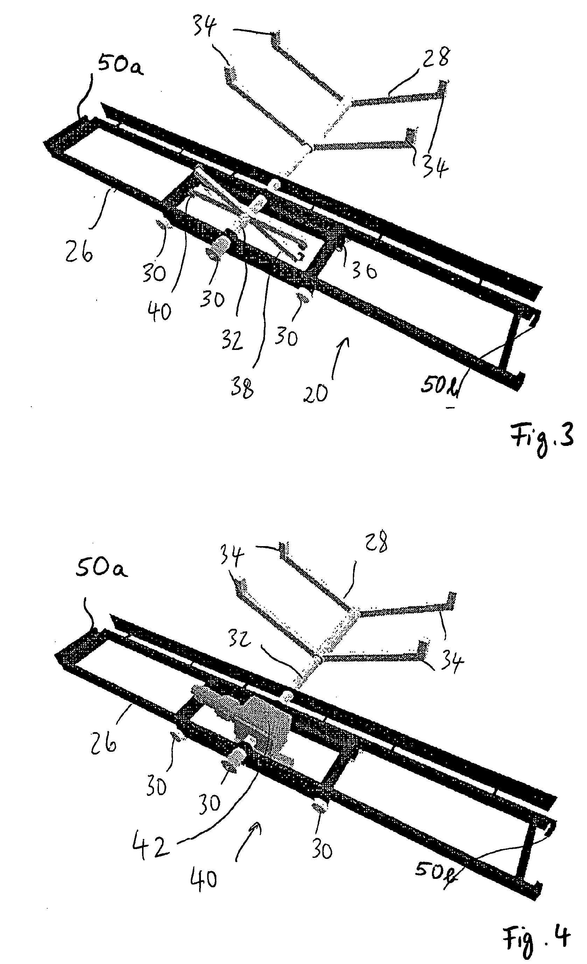

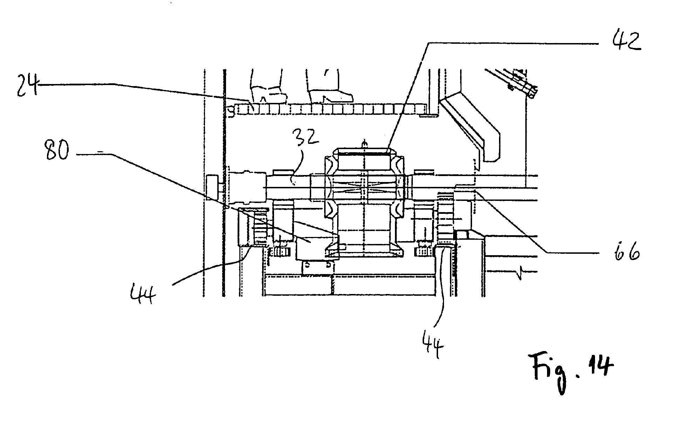

Die Fig. 2 zeigt schematisch einen Schnitt senkrecht zur Richtung der Translationsbewegung durch die Anlage und ebenfalls in schematischer Andeutung Tunnel 12, einen Behandlungstank 14 und die erste Übergangsstation 18. Die Darstellung nach Fig. 2 soll nur verdeutlichend das Eintauchen einer Fahrzeugkarosse 22 in den Tank 14 darstellen, während gleichzeitig die zweite Übergabestation 18 dargestellt ist entsprechend einem versetzten Schnitt, der einerseits die Übergabestation 18 zeigt andererseits aber durch einen Tank 14 hindurchführt. Im Bereich der Übergabestation ist ein Fahrwerk 20a dargestellt, das der später erläuterten Ausführungsform nach Fig. 3 ohne eigene Antriebsmittel entspricht und in eine Rückführungsposition nach unten verschwenkt ist. Gleichzeitig ist in Fig. 2 auch das Fahrwerk 20b dargestellt, das im Bereich der Behandlungsstrecke die Fahrzeugkarosse 22 hält. Im Bereich der Übergabestation wird, wie später anhand genauerer Darstellungen erläutert werden wird, das Fahrwerk von der Position entsprechend dem Fahrwerk 20b in die Position entsprechend dem Fahrwerk 20a um 90° um eine Schwenkachse nach unten geklappt, wobei gleichzeitig die behandelte Fahrzeugkarosse freigegeben wird und über eine Fördervorrichtung abtransportiert werden kann. Die Anordnung der Fahrwerke befindet sich unterhalb eines für Personal begehbaren Gitterrosts 24, wie später noch genauer aus der Fig. 14 ersichtlich ist.

Das in Fig. 1 dargestellte erste Modul kann im Rahmen der erfindungsgemäßen Vorrichtung aus verschiedenen Typen von zweiten Modulen kombiniert werden, welche unterschiedlich ausgestaltete Fahrwerke umfassen.

In Fig. 3 ist ein Fahrwerk 20 dargestellt, wie es bereits in der Fig. 2 schematisch angedeutet wurde. Das Fahrwerk 20 weist einen äußeren Rahmen 26 auf sowie einen inneren Rahmen 28, der zur Halterung der zu behandelnden Fahrzeugkarossen gestaltet ist. Die Bezeichnungen "äußerer Rahmen" und "innerer Rahmen" sollen hierbei nicht dahingehend interpretiert werden, dass sich der innere Rahmen innerhalb des umgebenden äußeren Rahmens befindet. Vielmehr wurde in Bezug auf die in Fig. 1 dargestellte Anlage diese Bezeichnung dahingehend gewählt, dass der äußere Rahmen außerhalb des Bereichs der Behandlungseinrichtungen fährt, während der innere Rahmen die zu behandelnden Fahrzeugkarossen im Bereich der Behandlungstanks hält. Der äußere Rahmen 26 ist mit Rollen 30 versehen, die auf einer Führungseinrichtung abrollen und den äußeren Rahmen entlang der Führungseinrichtung jeweils in einer definierten Position zur Führungseinrichtung halten.

Der innere Rahmen 28 ist drehbeweglich relativ zum äußeren Rahmen 26 gestaltet, wobei der innere Rahmen um die Drehachse 32 relativ zum äußeren Rahmen bewegbar ist. Der innere Rahmen 28 weist zudem Halteansätze 34 auf, die in Fig. 3 nur schematisch dargestellt sind und dem Halten der zu bearbeitenden Werkstücke, im vorliegenden Ausführungsbeispiel Fahrzeugkarossen, dienen. Darüber hinaus ist der äußere Rahmen 26 mit Kopplungsansätzen (50a, 50b) versehen. Schließlich besitzt der äußere Rahmen eine Verbindungseinrichtung (nicht dargestellt), die zum Ankoppeln einer Zugeinrichtung oder Antriebseinrichtung zum Ziehen mehrerer miteinander verbundener äußerer Rahmen ähnlich einem Eisenbahnzug mit mehreren Waggons dient.

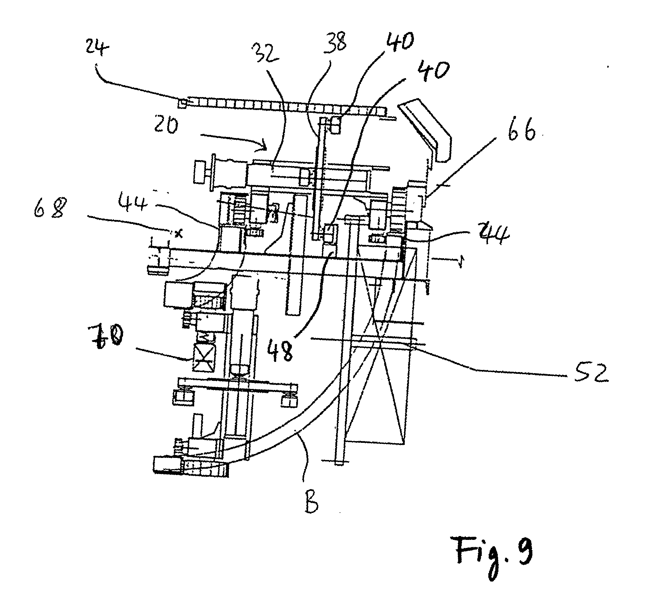

Das Fahrwerk ohne eigenen Fahrantrieb oder Drehantrieb gemäß Fig. 3 weist eine Hebelanordnung 38 mit mehreren Hebelarmen und an den Enden der Hebelarme angeordneten Rollen 40 auf, die mit einer Leitschiene mit geneigten Leitabschnitten zusammenwirken, um eine gesteuerte und jederzeit kontrollierte Drehung des inneren Rahmens 28 relativ zum äußeren Rahmen 26 zu bewirken. Zu diesem Zweck rollen die Rollen 40 an den Hebeln der Hebelanordnung 38 in der in Fig. 9 dargestellten Leitschiene 48 ab. Bei den auf- bzw. abwärtsgeneigten Abschnitten der Leitschiene wird dabei der innere Rahmen 28 um die Drehachse 32 herum relativ zum äußeren Rahmen 26 verschwenkt. Durch die Formgebung der Leitabschnitte der Leitschiene bzw. Steuerungsführungsschiene lassen sich somit gewünschte vollständige und teilweise Drehungen in jeweils nur einer oder wechselnden Drehrichtungen verwirklichen.

Die Leitschiene 48 bildet gemeinsam mit dem in Fig. 3 dargestellten Fahrwerk 20 sowie den Kopplungseinrichtungen 50a, 50b zwischen einzelnen Fahrwerken und einer Zugeinrichtung im Bereich der zweiten Übergabestation zum Ziehen der miteinanderverbundenen äußeren Rahmen das zweite Modul der gesamten Anlage, die mit dem Basissystem der Anlage als Systembaustein kombiniert werden kann. Bei der Verwendung eines Fahrwerks nach Fig. 3 lässt sich die gesamte Anlage als eine kontinuierlich fördernde Anlage ausgestalten.

Bei der Ausführungsform nach Fig. 4 wird ein Fahrwerk 40 eingesetzt, das sich vom Fahrwerk 20 nur im Bereich einer einzigen Komponente unterscheidet. Der Unterschied liegt darin, dass anstelle der Hebelanordnung 38 die Drehung um die Drehachse 32 durch einen Drehantrieb 42 bewirkt wird. Die übrigen Elemente entsprechen denjenigen nach Fig. 3, so dass auf die obigen Ausführungen verwiesen werden kann. Das Fahrwerk nach Fig. 4 wird im wesentlichen mit denselben Bauteilen des zweiten Moduls, wie oben im Zusammenhang mit dem Fahrwerk 20 beschrieben wurde, in der gesamten Anlage 10 eingesetzt. Allerdings ist bei dem Fahrwerk 40 nach Fig. 4 keine Leitschiene mit geneigten Leitabschnitten vorzusehen, die bei der Ausführungsform nach Fig. 3 mit der Hebelanordnung zusammenwirkte.

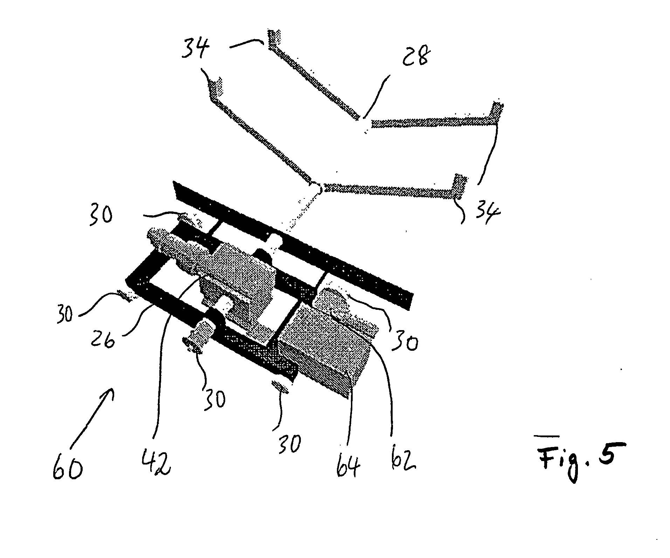

Fig. 5 zeigt eine dritte alternative Ausführungsform eines Fahrwerks, bei dem der innere Rahmen 28 wieder dem inneren Rahmen nach den Ausführungsformen nach Fig. 2 und 4 entspricht. Der äußere Rahmen ist jedoch deutlich kleiner bemessen als bei den Ausführungsformen nach Fig. 3 und 4 und weist wiederum Fahrrollen 30 zum Zusammenwirken mit der Führungseinrichtung (nicht dargestellt) auf. Der wesentliche Unterschied zwischen dem Fahrwerk 60 nach Fig. 5 und dem Fahrwerk 40 nach Fig. 4 besteht darin, dass nicht nur der Drehantrieb 42, sondern noch ein zusätzlicher Fahrantrieb 62 vorgesehen ist, der, wie auch der Drehantrieb 42, über eine mitfahrende Steuerung 64 gesteuert wird.

Bei der Verwendung eines Fahrwerks 60 gemäß Fig. 5 sind weder Leitschienen zur Steuerung der Drehbewegung noch Kopplungseinrichtungen zwischen den äußeren Rahmen 26, noch Verbindungseinrichtungen oder ein Rückführförderer noch eine Führungseinrichtung zum Ziehen einer Reihe von aneinander gekoppelten Fahrwerken vorzusehen, da die Fahrwerke sowohl in Bezug auf die auszuführenden Drehbewegungen unabhängig von der Translationsbewegung sind als auch unabhängig in Bezug auf die Translationsbewegungen der anderen Fahrwerke sind. Solange die verschiedenen hintereinander den Behandlungsbereich durchlaufenden Fahrwerke somit nicht miteinander kollidieren, sind beliebige Translations- und Drehbewegungen bei dem Fahrwerk 60 nach Fig. 5 möglich, während bei dem Fahrwerk 40 nach Fig. 4 die Translationsbewegung der einzelnen Fahrwerke miteinander gekoppelt ist und nur die Drehbewegung hiervon unabhängig ausgeführt werden kann. Bei dem Fahrwerk 20 nach Fig. 3 schließlich sind die Translationsbewegungen der hintereinander die Behandlungsstrecke durchlaufenden Fahrwerke starr miteinander gekoppelt und zudem die Drehbewegung jedes Fahrwerks an die Translationsbewegung gekoppelt.

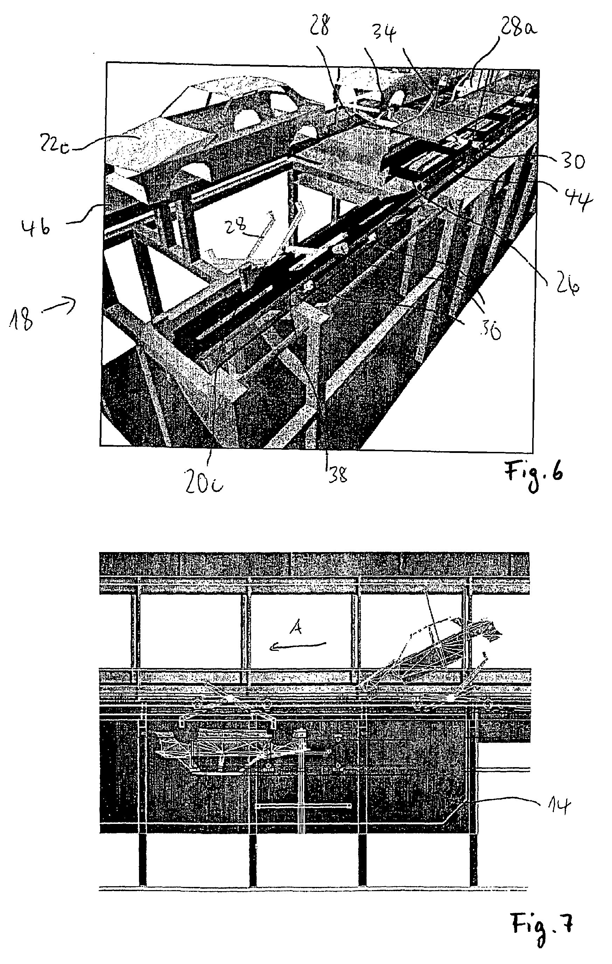

Fig. 6 zeigt schematisch die zweite Übergabestation 18 bei Verwendung von Fahrwerken 20 nach Fig. 3. Die in der Zeichenebene von rechts nach links geförderten Fahrzeugkarossen 22 werden auf den Halteeinrichtungen der inneren Rahmen 28 gehalten und die äußeren Rahmen 26 verlaufen mit den Rollen 30 entlang von Führungsschienen 44, während die Hebelanordnung 38 die Drehbewegung der inneren Rahmen steuert. So ist am oberen rechten Bildrand ein innerer Rahmen 28a zu sehen, der gerade verschwenkt ist und eine Fahrzeugkarosse in ein Behandlungsbad taucht.

Im Bereich der Übergabestation 18 wird, wie anhand des Fahrwerks 20c dargestellt ist, das Fahrwerk nach unten weggeklappt und gibt dabei die von dem Fahrwerk gehaltene Fahrzeugkarosse 22c frei. Gleichzeitig wird die Fahrzeugkarosse über eine zweite Fördereinrichtung abtransportiert.

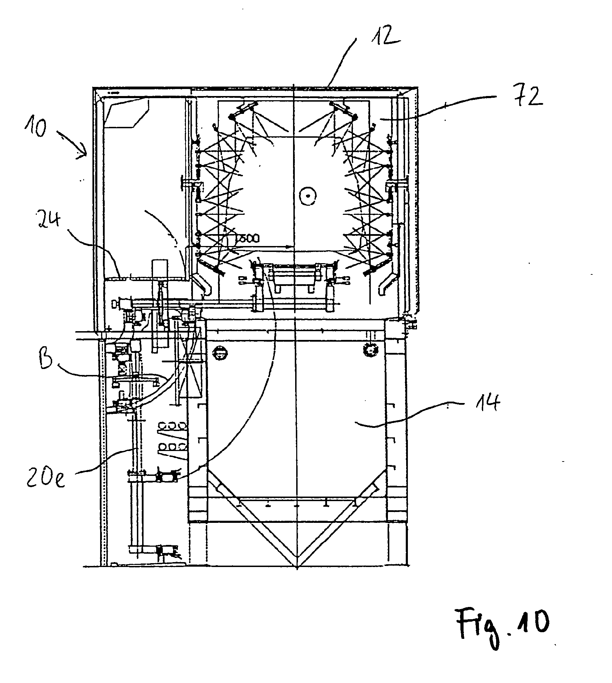

Das Verschwenken der Fahrwerke wird anhand der Fig. 9 und 10 noch deutlicher gezeigt.

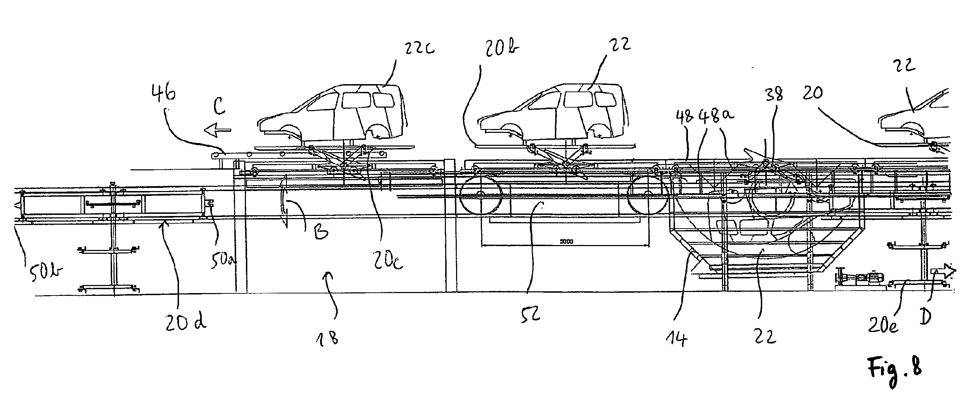

Fig. 7 zeigt die Bewegung der Fahrwerke mit der durch die Fahrwerke gehaltenen Fahrzeugkarosse in und durch einen Tank 14. Dabei werden in Bewegungsrichtung A die Fahrwerke 20 translatorisch bewegt und über die anhand der Fig. 3 erläuterten Hebelanordnungen, die mit einer Leitschiene zusammenwirken, der innere Rahmen relativ zum äußeren Rahmen bewegt. Die Fahrzeugkarossen tauchen bei dem in Fig. 7 dargestellten Beispiel über Kopf, d.h. mit der Motorhaube zuerst, in den Tank 14 ein und werden in einer Überkopfstellung durch den Tank hindurch transportiert. Das Transportieren der Fahrzeugkarossen über Kopf durch den Tank 14 besitzt den Vorteil, dass es zu keiner Sedimentation auf Sichtflächen kommt und zudem eine gute Hohlraumflutung stattfindet.

Fig. 8 zeigt schematisch die Abfolge verschiedener Behandlungsstationen der Anlage mit Fahrwerken 20 gemäß der Ausführungsform nach Fig. 2, 3, 6 und 7. Die einzelnen Fahrzeugkarossen 22 werden jeweils auf einem Fahrwerk 20 gehalten, wobei im Bereich des Tanks 14 durch die Hebelanordnung 38 und das Zusammenwirken mit einer Leitschiene 48 mit geneigten Leitabschnitten 48a die Drehbewegung erfolgt. Darüber hinaus ist die Übergabestation 18 dargestellt, die eine Schwenkeinrichtung aufweist, um in Richtung B die Fahrwerke 20 um 90° nach unten zu verschwenken, wie anhand des Fahrwerks 20d auf der linken Seite der Zeichenebene dargestellt ist. Im Bereich der Übergabestation 18 beim Herunterschwenken des Fahrwerks 20 muss natürlich sichergestellt werden, dass die behandelte Fahrzeugkarosse 22c von einer Fördereinrichtung 26 aufgenommen wird, die in Fig. 8 schematisch dargestellt ist. Die Fördereinrichtung kann so gestaltet sein, dass sie sich zwischen den einzelnen Armen des inneren Rahmens befindet und beim Nachuntenschwenken des Fahrwerks gleichsam die Fahrzeugkarosse auf der Fördereinrichtung 48 abgesetzt und in Pfeilrichtung C aus der Anlage heraustransportiert wird.

Bei der in Fig. 8 dargestellten Ausführungsform besitzen die einzelnen Fahrwerke keinen eigenen Drehantrieb oder Fahrantrieb, so dass diese unter Verwendung einer Pull-Technik durch die gesamte Anlage gezogen werden. Hierbei sind die einzelnen Fahrwerke 20 mit Kopplungsansätzen versehen, wobei jedes Fahrwerk 20 einen Kopplungsansatz 50a und einen Kopplungsansatz 50b auf der entgegengesetzten Seite besitzt. Die einzelnen Fahrwerke werden durch die Anlage so geführt, dass die korrespondierend geformten Kopplungsansätze 50a und 50b formschlüssig ineinander greifen und somit die einzelnen Fahrwerke 20 gleichsam wie in einem Zug von demjenigen Fahrwerk 20c gezogen werden können, das sich jeweils am nächsten zur Übergabeeinrichtung 19 befindet, bevor das Fahrwerk dort durch die Schwenkbewegung B nach unten aus dem formschlüssigen Eingriff mit dem in Bewegungsrichtung dahinter angeordneten Fahrwerk 20b tritt. Die Kopplungseinrichtungen können auch die in Fig. 3 dargestellte Hakenform aufweisen. Nach dem Abschwenken des Fahrwerks in der Übergabestation 18 wird dieses von Gurtförderern gegriffen und in Bewegungsrichtung D zurückgeführt. Ein Fahrwerk während der Rückführung ist mit 20e in Fig. 8 bezeichnet.

Wenn ein Fahrwerk in der Übergabestation 18 nach unten abgeklappt worden ist, muss mit Hilfe eines Antriebs 52 oder mit Hilfe einer anderen Zieheinrichtung das nunmehr am nächsten zur Übergabestation 18 angeordnete Fahrwerk 20b und die an diesem Fahrwerk angekoppelten übrigen Fahrwerke in der Richtung C der translatorischen Bewegung zur Übergabestation 18 gefördert werden, bevor im nachfolgenden Schritt das Fahrwerk 20b nach unten abklappt und das unmittelbar nachfolgende Fahrwerk, das zu diesem Zeitpunkt im Bereich des Antriebs 52 angeordnet ist, wiederum in Art einer Lokomotive die übrigen daran angekoppelten Fahrwerke in Pfeilrichtung C weiterfördert. In gleicher Weise wird an der Übergabestation am Beginn der Behandlungsstrecke ein "neues" Fahrwerk wieder in die Kette der in der Behandlungsstrecke angeordneten Fahrwerke über die Schwenkbewegung nach oben eingehakt.

Der in Fig. 8 in Bewegungsrichtung vor der Übergabestation 18 angeordnete Bereich mit dem Fahrwerk 20d ist ein Wartungsplatz, der für das Betriebspersonal einen einfachen Zugang zu den Fahrwerken für Wartungs- und Reparaturarbeiten erlaubt.

In Fig. 9 ist das Herunterklappen eines Fahrwerks dargestellt. Unter dem bereits oben beschriebenen Gitterrost 24, der gleichzeitig als Wartungszugang dient, ist das Fahrwerk 20 mit der Hebelanordnung 38 auf den Führungsschienen 44 geführt. Auf der den Behandlungsstationen zugewandten Seite ist eine durchgängige Abschottung 66 angeordnet. In der Übergabestation 18 wird das gesamte Fahrwerk 20, wie bereits in Fig. 8 dargestellt wurde, um eine Schwenkachse 68 um ca. 90° nach unten verschwenkt, wie durch die Schwenkradien B angedeutet ist. Die Schwenkachse verläuft parallel zur Translationsrichtung C der Fahrwerke und ist auf der den Behandlungseinrichtungen abgewandten Seite der Fahrwerke angeordnet, so dass die nach unten geklappten Fahrwerke nicht in Kollision mit den Fahrwerken im Bereich der Behandlungsstrecke treten können. Beim Herunterklappen wird nicht nur das Fahrwerk alleine, sondern werden auch die Führungsschienen im Bereich der Übergabestation 18 mit nach unten verschwenkt, so dass das Fahrwerk auch während des Verschwenkens nach unten exakt geführt wird. Nach dem Verschwenken nach unten wird das Fahrwerk durch den Gurtförderer 70 schnell an die zu Beginn der Anlage angeordnete, weitere Übergabestation transportiert, in der der umgekehrte Bewegungsablauf B stattfindet und das Fahrwerk nach oben verschwenkt wird. Fig. 9 könnte somit in gleicher Weise die Übergabeeinrichtung am Beginn der Behandlungsstrecke darstellen, da in Bezug auf die Bewegungsabläufe kein Unterschied zwischen den beiden Übergabestationen besteht, außer dass eine feste Verbindung zu der zu behandelnden Fahrzeugkarosse in der ersten Übergabeeinrichtung hergestellt und in der zweiten Übergabeeinrichtung entsprechend wieder gelöst werden muss.

Fig. 10 zeigt denselben Sachverhalt noch einmal, wobei hier eine Behandlungsstation 72 dargestellt ist, die eine Sprühbehandlung bewirkt und selbstverständlich alternativ zu den bislang in der ausführlichen Beschreibung bevorzugter Ausführungsformen verwendeten Tauchbädern ebenfalls innerhalb des Tunnels 12 der Anlage angeordnet werden kann. Aus der Darstellung nach Fig. 10 wird deutlich, dass durch das Herunterklappen der Fahrwerke in die mit 20e dargestellte Position der vorhandene Raum in bestmöglicher Weise ausgenützt wird, weil die Fahrwerke beim Rücktransport neben einem eventuellen Tank 14 entlang geführt werden können und somit der vorhandene Raum in bestmöglicher Weise ausgenützt wird.

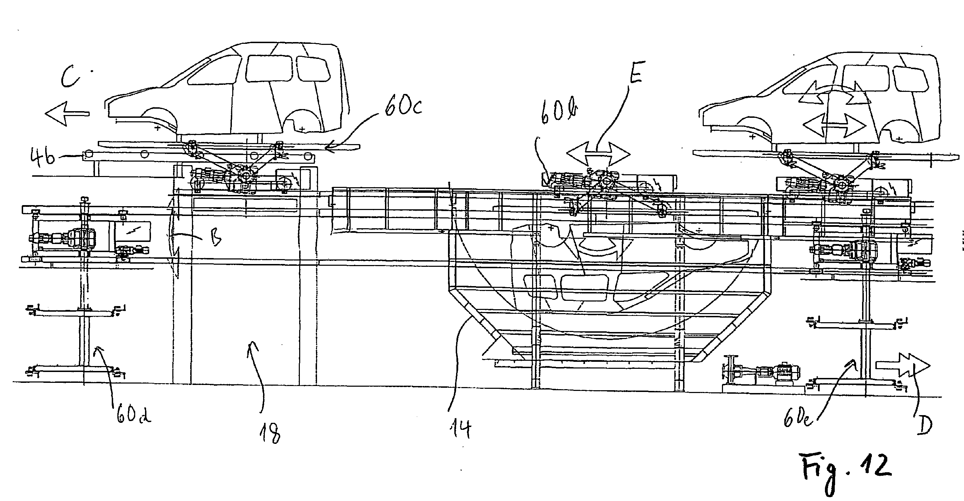

Fig. 12 zeigt eine alternative Ausführungsform der Erfindung unter Verwendung eines Fahrwerks 60. Die Darstellung entspricht im wesentlichen derjenigen nach Fig. 8, doch muss aufgrund des Vorsehens von Fahrwerken 60 mit einem eigenen Fahrantrieb sowie einem eigenen Drehantrieb keine Leitschiene mit geneigten Abschnitten 48a vorgesehen werden. Darüber hinaus sind die Fahrwerke 60 kleiner ausgestaltet und besitzen auch keine Kopplungsansätze 50. Schließlich kann der Antrieb zum Ziehen eines am weitesten nahe der Übergabestation 18 angeordneten Fahrwerks entfallen. In Übereinstimmung mit der Bezeichnung nach Fig. 8 wird mit 60c dasjenige Fahrwerk bezeichnet, dass sich im Bereich der Übergabestation befindet und mit Referenzziffer 60b das Fahrwerk, dass sich in Richtung C der translatorischen Bewegung hinter dem Fahrwerk 60c befindet. Das Fahrwerk 60d befindet sich auf einem Wartungsplatz, während das Fahrwerk 60e in Pfeilrichtung D schnell zurück transportiert wird. Aufgrund der unabhängigen Fahr- sowie Drehantriebe lässt sich die Fahrrichtung bereichsweise auch umkehren, wie anhand des Pfeils E angedeutet ist. Es kann somit innerhalb eines Behandlungsbereichs und insbesondere im Bereich eines Tanks 14 eine beliebige Bewegung der Fahrwerke durchgeführt werden. Die Übergabe an den Übergabestationen erfolgt in der oben beschriebenen Weise unter Verwendung der Fahrwerke 20.

Die Informations- sowie Energieübertragung zwischen der Führungseinrichtung als Teil des ersten Moduls und den Fahrwerken 60 erfolgt vorzugsweise über eine induktive Stromübertragung 80, wie aus Fig. 14 ersichtlich ist. Es wird somit deutlich, dass sich die Anlage gemäß der Ausführungsform nach Fig. 8 auf recht einfache Weise in die Anlage nach Fig. 12 umrüsten lässt, indem hauptsächlich unterschiedliche Fahrantriebe eingesetzt werden und die oben beschriebenen, zusätzlichen Anpassungsmaßnahmen durchgeführt werden.

In gleicher Weise ist natürlich auch eine der oben im Detail beschriebenen Hybrid-Lösungen denkbar, bei denen die Fahrwerke nur einen einzigen Antrieb besitzen, wie in Fig. 4 als Beispiel gezeigt wurde. Die Rollenbahn 46 zum Abfördern der behandelnden Fahrzeugkarossen, die Schwenkeinrichtung für die Fahrwerke und der schnelle Rücklauf unter Verwendung von Gurtförderern entspricht bei einer Hybrid-Lösung denjenigen der bereits oben beschriebenen Ausführungsformen.

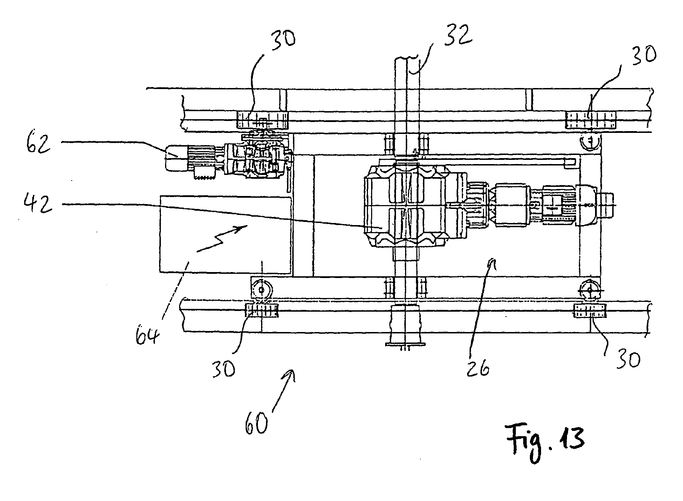

Fig. 13 zeigt noch einmal eine Draufsicht auf einen Fahrantrieb 60 der sowohl einen Fahrantrieb 62 als auch einen Drehantrieb 42 und eine mitfahrende Steuerung 64 aufweist. Der innere Rahmen 28 ist bei der Ausführungsform nach Fig. 13 nicht mehr dargestellt; die Abbildung endet mit der Drehachse 32.

Die Vorteile der erfindungsgemäßen Vorrichtung bestehen in der Austauschbarkeit der Systembausteine (erstes Modul und zweites Modul) unter Beibehaltung des Basissystems als erstem Modul mit den Basiskomponenten Tunnel, Tanks und Führung mit Übergabestationen. Die Anlage besitzt einen geringen Flächenbedarf, da kein Platzverlust unter der Anlage stattfindet und durch die geringeren Abmessungen lassen sich auch Einsparungen beim Stahlbau verwirklichen. Zusätzlich lassen sich Lager und Gelenke außerhalb der Tauchmedien anordnen und durch mitgeführte Dichtungen eine optimale Wellenabdichtung verwirklichen. Die Anlage kann mit geringen Umrüstarbeiten in Form der in Fig. 12 dargestellten elektronischen Variante mit einer Einzelansteuerung der Fahrwerke, mit gesondertem Fahr- und Drehantrieb und einer maximalen Flexibilität der Bewegung der einzelnen Fahrwerke ausgestattet werden. Alternativ kann auch die Ausführungsform nach Fig. 8 mit starr miteinander verketteten Fahrwerken verwirklicht werden, wobei eine maximale Zuverlässigkeit und ein höchster Durchsatz erzielbar sind. Gegenüber den herkömmlichen Lösungen mit umlaufend verketteten Fahrwerken lässt sich durch die schnelle Rückführung jedoch ebenfalls bereits der Vorteil eines geringeren Einsatzes von Fahrwerken erzielen. Auch entfällt das Kettenspannen. Zwischen den beiden genannten Lösungen sind jedoch auch Hybrid-Lösungen denkbar, bei denen zum Beispiel die Fahrwerke miteinander verkettet sind und nur die Drehmotoren einzeln angesteuert werden. Eine derartige Hybrid-Lösung kann einen hohen Durchsatz bei gleichzeitig hoher Flexibilität verwirklichen. Insbesondere die Lösungen mit einem gesonderten Drehantrieb besitzen den Vorteil, dass die Karosserien im Becken leicht hin- und hergeschwenkt werden und in einem frei wählbaren Winkel über dem Becken abtropfen können. Die Lösungen mit einem zusätzlich vorhandenen eigenen Fahrantrieb besitzen den zusätzlichen Vorteil, dass die Karosserien mit hoher Geschwindigkeit zum Tauchbecken transportiert werden können, während die Bearbeitungszeit im Tauchbecken oder in einer anderen Behandlungseinrichtung bei gleichbleibender Verweildauer der Karosserien in der gesamten Behandlungsstrecke verringert werden kann. Der Hauptvorteil liegt aber in der hohen Flexibilität der Vorrichtung, die sich über gemeinsame Bauteile für die verschiedenen kundenspezifischen Konzepte kostengünstiger herstellen lässt und zudem für zukünftige Produktionsänderungen oder Neukonfigurierungen der Anlage Raum bietet. Die spezielle Rückführung der Fahrwerke minimiert zudem den Platzbedarf der gesamten Vorrichtung.

## Patentansprüche

1. Vorrichtung zur Behandlung von Werkstücken (22), insbesondere Fahrzeugkarossen (22), in Modulbauweise, mit
- einem ersten Modul, umfassend:
- eine erste Übergabestation (18), die mit einer ersten Fördereinrichtung zur Zufuhr der zu behandelnden Werkstücke (22) zusammenwirkt;
- eine Behandlungsstrecke (12);
- eine Führungseinrichtung (44) entlang der Behandlungsstrecke (12); sowie
- eine zweite Übergabestation (18), die mit einer zweiten Fördereinrichtung (46) zum Abtransport der behandelten Werkstücke (22) zusammenwirkt, wobei in der zweiten Übergabestation (18) die Fahrwerke (20; 40; 60) um eine Schwenkachse (68) im Bereich der Führungseinrichtung (44) um einen Winkel von etwa 90° verschwenkt werden und in der ersten Übergabestation (18) die Fahrwerke in entgegengesetzter Schwenkrichtung um denselben Winkelbetrag zurückgeschwenkt werden; sowie
- einem zweiten Modul, umfassend ein oder mehrere Fahrwerke (20; 40; 60), an denen die Werkstücke (22) befestigbar sind und die entlang der Führungseinrichtung (44) bewegbar sind;
**dadurch gekennzeichnet, dass** die Behandlungsstrecke (12) einen oder mehrere Behandlungsbereichen (14) zur Oberflächenbehandlung der Werkstücke aufweist und dass das mindestens eine Fahrwerk (20, 40, 60) Mittel (32, 38, 42) zum Drehen des Werkstücks (22) aufweist, um das Werkstück (22) in bzw. aus dem mindestens ein Behandlungsbereich (14) ein bzw. auszubrengen.

2. Vorrichtung nach Anspruch 1,
**dadurch gekennzeichnet, dass** die Führungseinrichtung (44) nur auf einer Seite der Behandlungsstrecke (12) angeordnet ist.

3. Vorrichtung nach Anspruch 2,
**dadurch gekennzeichnet, dass** die Führungseinrichtung mindestens eine Schiene (44) umfasst.

4. Vorrichtung nach Anspruch 3,
**dadurch gekennzeichnet, dass** die Fahrwerke (20; 40; 60) Rollen (30) aufweisen, die an der mindestens einen Schiene (44) der Führungseinrichtung abrollen.

5. Vorrichtung nach Anspruch 1,
**dadurch gekennzeichnet, dass** das erste Modul weiter umfasst:
- eine Rückführeinrichtung, vorzugsweise in Form eines Gurtförderers (70) oder Kettenförderers, zur Förderung der Fahrwerke von der zweiten Übergabestation (18) zur ersten Übergabestation (18).

6. Vorrichtung nach Anspruch 5,
**dadurch gekennzeichnet, dass** die Rückführeinrichtung (70) eine Weicheneinrichtung zum Ein- oder Ausschleusen von Fahrwerken zu bzw. von einem Wartungsbereich aufweist.

7. Vorrichtung nach Anspruch 1
**dadurch gekennzeichnet, dass** die Schwenkachse (68) im wesentlichen parallel zur Führungseinrichtung (44) und auf derjenigen Seite der Führungseinrichtung (44) angeordnet ist, die dem einen oder den mehreren Behandlungsbereichen (14) abgewandt ist.

8. Vorrichtung nach einem der vorhergehenden Ansprüche,
**dadurch gekennzeichnet, dass** die Fahrwerke (20; 40; 60) und die Führungseinrichtung (44) so aufgebaut sind, dass alle Lagerungen bei der Behandlung der Werkstücke (22) jederzeit außerhalb des einen oder der mehreren Behandlungsbereiche (14) angeordnet sind.

9. Vorrichtung nach einem der vorhergehenden Ansprüche,
**dadurch gekennzeichnet, dass** die Fahrwerke (20; 40; 60) umfassen:
- einen äußeren Rahmen (26); sowie
- einen inneren Rahmen (28), der relativ zum äußeren Rahmen um eine Drehachse (32) drehbeweglich ist, wobei die Werkstücke (22) am inneren Rahmen (28) befestigbar sind; wobei
- die Drehachse (32) jedes Fahrwerks im wesentlichen horizontal sowie senkrecht zur Bewegungsrichtung der Fahrwerke (20; 40; 60) entlang der Behandlungsstrecke (12) angeordnet ist.

10. Vorrichtung nach Anspruch 9, weiter umfassend:
- eine Einrichtung, um die Drehachse (32) relativ zum äußeren Rahmen anzuheben und/oder schräg zu stellen.

11. Vorrichtung nach Anspruch 9 oder Anspruch 10, sofern diese auf Anspruch 5 rückbezogen sind,
**dadurch gekennzeichnet, dass** die Fahrwerke (20; 40) im Bereich der ersten Übergabestation (18) aneinander koppelbar sind und im Bereich der zweiten Übergabestation (18) voneinander lösbar sind.

12. Vorrichtung nach Anspruch 11,
**dadurch gekennzeichnet, dass** die äußeren Rahmen (26) vordere Kopplungselemente (50a) und hintere Kopplungselemente (50b) aufweisen, die so gestaltet sind, dass das hintere Kopplungselement (50b) jedes Fahrwerks (20; 40) mit dem vorderen Kopplungselement (50a).eines nachfolgenden Fahrwerks (20; 40) eine lösbare Formschlussverbindung ausbilden kann.

13. Vorrichtung nach Anspruch 11 oder Anspruch 12,
**dadurch gekennzeichnet, dass** die Fahrwerke (20; 40) eine im Bereich des äußeren Rahmens angeordnete Verbindungseinrichtung, vorzugsweise einen hakenförmigen Ansatz, für eine Zugeinrichtung (52) aufweisen.

14. Vorrichtung nach Anspruch 13,
**dadurch gekennzeichnet, dass** die Zugeinrichtung (52) im Bereich der zweiten Übergabestation (18) oder eine Schiebeeinrichtung im Bereich der ersten Übergabestation angeordnet ist und gestaltet ist, um eine lösbare Verbindung mit der Verbindungseinrichtung (36) des Fahrwerks (20; 40) auszubilden, das sich am nächsten zur zweiten Übergabestation (18) im Bereich der Behandlungsstrecke (12) befindet, wobei dieses Fahrwerk durch die Zugeinrichtung (52) zur zweiten Übergabestation (18) zwangsförderbar ist oder die Reihe von miteinander gekoppelten Fahrwerken durch die Schiebeeinrichtung in Richtung zur zweiten Übergabestation zwangsförderbar sind.

15. Vorrichtung nach einem der Ansprüche 9 bis 14,
**dadurch gekennzeichnet, dass** das zweite Modul weiterhin umfasst:
- eine Steuereinrichtung (48; 48a; 48b) im Bereich der Führungseinrichtung (44) , die mit den Fahrwerken (20) so zusammenwirkt, um eine relative Drehbewebung zwischen äußerem Rahmen (26) und innerem Rahmen (28) um die Drehachse (32) zu steuern.

16. Vorrichtung nach Anspruch 15,
**dadurch gekennzeichnet, dass** die Steuereinrichtung eine Leitschiene (48) mit geneigten Leitabschnitten (48a, 48b) umfasst, die mit einer drehstarr mit dem inneren Rahmen (28) verbundenen Hebelanordnung (38) zusammenwirkt.

17. Vorrichtung nach einem der Ansprüche 9 bis 14, weiter umfassend einen Drehantrieb (42) an jedem Fahrwerk, der ausgangsseitig drehstarr mit dem inneren Rahmen (28) der Fahrwerke (40; 60) verbunden ist.

18. Vorrichtung nach Anspruch 9 oder Anspruch 10,
**dadurch gekennzeichnet, dass** die Fahrwerke (60) umfassen:
- einen Fahrantrieb (64) zur translatorischen Bewegung der Fahrwerke (60) entlang der Behandlungsstrecke (12); und
- einen Drehantrieb (42) zur Drehbewegung des inneren Rahmens (28) relativ zum äußeren Rahmen (26); wobei
- die translatorische Bewegung unabhängig von der Drehbewegung ist.

19. Vorrichtung nach Anspruch 17 oder Anspruch 18,
**dadurch gekennzeichnet, dass** die Informationsübertragung und/oder Energieübertragung vom ersten Modul auf die Fahrwerke berührungslos, insbesondere induktiv erfolgt.

20. Verfahren zur Behandlung von Werkstücken (22), insbesondere Fahrzeugkarossen (22), in einer Vorrichtung mit einer Behandlungsstrecke (12) mit einem oder mehreren Behandlungsbereichen zur Oberflächenbehandlung der Werkstücke (22), wobei die Werkstücke (22) auf Fahrwerken (20; 40; 60) befestigt werden, die entlang der Behandlungsstrecke (12) bewegt werden, umfassend die Schritte: .
- Antransport eines Werkstücks (22) durch eine erste Fördereinrichtung zu einer ersten Übergabestation (18);
- Hochschwenken eines Fahrwerks um eine Schwenkachse (68), bis das Fahrwerk (20; 40; 60) das Werkstück (22) hält;
- Durchfahren der Behandlungsstrecke bis zu einer zweiten Übergabestation (18) unter einer zusätzlichen, abschnittsweisen Drehbewegung zum Ein- bzw. Ausbringen des Werkstücks (22) in bzw. aus einem oder mehreren Behandlungsbereichen;
- Herunterschwenken des Fahrwerks (20; 40; 60) um die Schwenkachse (68) im Bereich der zweiten Übergabestation (18); und gleichzeitig
- Abtransport des Werkstückes (22) durch eine zweite Fördereinrichtung (46);
- Rücktransport der um etwa 90° aus der waagerechten verschwenkten Fahrwerke (20; 40; 60) zur ersten Übergabestation (18).

21. Verfahren nach Anspruch 20,
**dadurch gekennzeichnet, dass** in der zweiten Übergabestation (18) die Fahrwerke (20; 40; 60) um eine Schwenkachse (68) im Bereich der Führungseinrichtung um einen Winkel von etwa 90° verschwenkt werden und in der ersten Übergabestation (18) die Fahrwerke in entgegengesetzter Schenkrichtung um denselben Winkelbetrag zurückgeschwenkt werden.

22. Verfahren nach Anspruch 21,
**dadurch gekennzeichnet, dass** die Schwenkachse (68) im wesentlichen parallel zur Führungseinrichtung (44) und auf derjenigen Seite der Führungseinrichtung (44) angeordnet ist, die dem einen oder den mehreren Behandlungsbereichen abgewandt ist.

23. Verfahren nach einem der Ansprüche 20 bis 22,
**dadurch gekennzeichnet, dass** die Werkstücke Fahrzeugkarossen (22) sind, die in Behandlungsbäder eingetaucht werden, wobei die Fahrzeugkarossen beim Eintauchen in ein Behandlungsbad um 180° um eine im wesentlichen horizontal und senkrecht zur Bewegungsrichtung entlang der Behandlungsstrecke angeordnete Drehachse gedreht, das Behandlungsbad in dieser Position durchfahren und beim Ausbringen aus dem Behandlungsbad wieder um 180° um die Drehachse gedreht werden.

24. Verfahren nach Anspruch 23,
**dadurch gekennzeichnet, dass** die Fahrzeugkarossen (22) beim Durchfahren der Behandlungsbäder zusätzlich eine Pendelbewegung ausführen.

25. Verfahren nach Anspruch 23 bis 24,
**dadurch gekennzeichnet, dass** die Fahrwerke (20; 40; 60) im Bereich der Behandlungsstrecke miteinander gekoppelt werden, indem ein im Bereich der ersten Übergabestation (18) hochgeschwenktes Fahrwerk (20; 40; 60) formschlüssig mit dem benachbarten, im Bereich der Behandlungsstrecke befindlichen Fahrwerk (20; 40; 60) verbunden wird und die formschlüssige Verbindung wieder gelöst wird, wenn das benachbarte Fahrwerk (20; 40; 60) im Bereich der zweiten Übergabestation (18) heruntergeschwenkt wird.

26. Verfahren nach einem der Ansprüche 20 bis 25,
**dadurch gekennzeichnet, dass** die Transportgeschwindigkeit der Fahrwerke (20; 40; 60) beim Rücktransport höher ist als die durchschnittliche Geschwindigkeit der Fahrwerke (20; 40; 60) im Bereich der Behandlungsstrecke.

27. Verfahren nach einem der Ansprüche 20 bis 26,
**dadurch gekennzeichnet, dass** die Drehbewegung der Fahrwerke (20; 40; 60) an die Translationsbewegung der Fahrwerke (20; 40; 60) gekoppelt ist.

28. Verfahren nach einem der Ansprüche 20 bis 26,
**dadurch gekennzeichnet, dass** die Drehbewegung der Fahrwerke (20; 40; 60) unabhängig von der Translationsbewegung der Fahrwerke (20; 40; 60) ist.

29. Verfahren nach Anspruch 28,
**dadurch gekennzeichnet, dass** die Fahrwerke (20; 40; 60) im Bereich der Behandlungsstrecke unabhängig voneinander in Translationsrichtung bewegt werden.

30. Verfahren nach einem der Ansprüche 20 bis 27,
weiter umfassend das Herstellen einer lösbaren Verbindung zwischen einer Zugeinrichtung oder Antriebseinrichtung und einer Verbindungseinrichtung desjenigen Fahrwerks (20; 40; 60), dass sich am nächsten zur zweiten Übergabestation im Bereich der Behandlungsstrecke befindet, wobei dieses Fahrwerk (20; 40; 60) durch die Zugeinrichtung oder Antriebseinrichtung zur zweiten Übergabestation (18) gezogen wird.

31. Verfahren nach einem der Ansprüche 20 bis 27, weiter umfassend das Herstellen einer Verbindung zwischen einer Schiebeeinrichtung und einer Reihe miteinander verbundener Fahrwerke (20; 40; 60) und das Schieben der miteinander verbundenen Fahrwerke (20; 40; 60) in Richtung zur zweiten Übergabestation (18).

## Claims

1. Apparatus for the treatment of work pieces (22), in particular vehicle bodies (22), of modular construction, having
- a first module, including:
- a first transfer station (18) which co-operates with a first conveying device for delivery of the work pieces (22) to be treated;
- a treatment zone (12);
- a guide device (44) along the treatment zone (12); and
- a second transfer station (18) which co-operates with a second conveying device (46) for removing the treated work pieces (22), the chassis units (20; 40; 60) being pivoted through an angle of approximately 90° about a pivot axis (68) in the region of the guide device (44) in the second transfer station (18), and the chassis units being pivoted back by the same angular amount in the opposite direction of pivoting in the first transfer station (18); and
- a second module, including one or more chassis units (20; 40; 60) to which the work pieces (22) can be attached and which are movable along the guide device (44);
**characterised in that** the treatment zone (12) comprises one or more treatment regions (14) for surface treatment of the work pieces, and **in that** the at least one chassis unit (20, 40, 60) comprises means (32, 38, 42) for rotating the work piece (22) in order to bring the work piece (22) into and out of the at least one treatment region (14).

2. Apparatus according to claim 1,
**characterised in that** the guide device (44) is arranged on only one side of the treatment zone (12).

3. Apparatus according to claim 2,
**characterised in that** the guide device includes at least one rail (44).

4. Apparatus according to claim 3,
**characterised in that** the chassis units (20; 40; 60) comprise rollers (30) which roll over the at least one rail (44) of the guide device.

5. Apparatus according to claim 1,
**characterised in that** the first module further includes:
- a return device, preferably in the form of a belt conveyor (70) or chain conveyor, for conveying the chassis units from the second transfer station (18) to the first transfer station (18).

6. Apparatus according to claim 5,
**characterised in that** the return device (70) comprises a switch device for inward or outward transfer of chassis units to and from a maintenance region.

7. Apparatus according to claim 1,
**characterised in that** the pivot axis (68) is arranged substantially parallel to the guide device (44) and on the side of the guide device (44) which faces away from the one or more treatment regions (14).

8. Apparatus according to any of the preceding claims,
**characterised in that** the chassis units (20; 40; 60) and the guide device (44) are constructed in such manner that all bearings during treatment of the work pieces (22) are at all times arranged outside the one or more treatment regions.

9. Apparatus according to any of the preceding claims,
**characterised in that** the chassis units (20; 40; 60) include:
- an outer frame (26); and
- an inner frame (28) which is rotatable about an axis of rotation (32) relative to the outer frame, the work pieces (22) being capable of being attached to the inner frame (28);
- the axis of rotation (32) of each chassis unit being arranged substantially horizontally and perpendicularly to the direction of movement of the chassis units (20; 40; 60) along the treatment zone (12).

10. Apparatus according to claim 9, further including:
- a device for lifting and/or tilting the axis of rotation (32) relative to the outer frame.

11. Apparatus according to claim 9 or claim 10, as far as they refer back to claim 5,
**characterised in that** the chassis units (20; 40) can be coupled to each other in the region of the first transfer station (18) and detached from each other in the region of the second transfer station (18).

12. Apparatus according to claim 11,
**characterised in that** the outer frames (26) comprise front coupling elements (50a) and rear coupling elements (50b) which are designed such that the rear coupling element (50b) of each chassis unit (20; 40) can form a releasable form-locking connection with the front coupling element (50a) of a subsequent chassis unit (20; 40).

13. Apparatus according to claim 11 or claim 12,
**characterised in that** the chassis units (20; 40) comprise a connecting device arranged in the region of the outer frame, preferably a hook-shaped attachment, for a pulling device (52).

14. Apparatus according to claim 13,
**characterised in that** the pulling device (52) is arranged in the region of the second transfer station (18) or a pushing device is arranged in the region of the first transfer station and designed to form a releasable connection to the connecting device (36) of the chassis unit (20; 40) which is closest to the second transfer station (18) in the region of the treatment zone (12), this chassis unit being capable of being positively conveyed by the pulling device (52) to the second transfer station (18), or the row of chassis units coupled together being capable of being positively conveyed by the pushing device in a direction towards the second transfer station.

15. Apparatus according to any of claims 9 to 14,
**characterised in that** the second module further includes:
- a control device (48; 48a; 48b) in the region of the guide device (44), which co-operates with the chassis units (20) so as to control a relative rotational movement between outer frame (26) and inner frame (28) about the axis of rotation (32).

16. Apparatus according to claim 15,
**characterised in that** the control device includes a guide rail (48) with inclined guide sections (48a, 48b) which co-operates with a lever assembly (38) non-rotatably connected to the inner frame (28).

17. Apparatus according to any of claims 9 to 14, further including a rotary drive (42) on each chassis unit, which on the output side is non-rotatably connected to the inner frame (28) of the chassis units (40; 60).

18. Apparatus according to claim 9 or claim 10,
**characterised in that** the chassis units (60) include:
- a transmission drive (64) for translational movement of the chassis units (60) along the treatment zone (12); and
- a rotary drive (42) for rotational movement of the inner frame (28) relative to the outer frame (26) ;
- the translational movement being independent of the rotational movement.

19. Apparatus according to claim 17 or claim 18,
**characterised in that** information transmission and/or energy transmission from the first module to the chassis units takes place contactlessly, in particular inductively.

20. Method for the treatment of work pieces (22), in particular vehicle bodies (22), in an apparatus having a treatment zone (12) with one or more treatment regions for surface treatment of the work pieces (22), the work pieces (22) being attached to chassis units (20; 40; 60) which are moved along the treatment zone (12), including the steps of:
- delivery of a work piece (22) by a first conveying device to a first transfer station (18);
- upward pivoting of a chassis unit about a pivot axis (68) until the chassis unit (20; 40; 60) holds the work piece (22);
- travel through the treatment zone as far as a second transfer station (18) with an additional rotational movement in sections for bringing the work piece (22) into and out of one or more treatment regions;
- downward pivoting of the chassis unit (20; 40; 60) about the pivot axis (68) in the region of the second transfer station (18); and at the same time
- removal of the work piece (22) by a second conveying device (46);
- return to the first transfer station (18) of the chassis units (20; 40; 60) which have been pivoted through about 90° out of the horizontal.

21. Method according to claim 20,
**characterised in that** the chassis units (20; 40; 60) are pivoted through an angle of approximately 90° about a pivot axis (68) in the region of the guide device in the second transfer station (18), and the chassis units are pivoted back by the same angular amount in the opposite direction of pivoting in the first transfer station (18).

22. Method according to claim 21,
**characterised in that** the pivot axis (68) is arranged substantially parallel to the guide device (44) and on the side of the guide device (44) which faces away from the one or more treatment regions.

23. Method according to any of claims 20 to 22,
**characterised in that** the work pieces are vehicle bodies (22) which are immersed in treatment baths, wherein upon immersion in a treatment bath the vehicle bodies are rotated through 180° about an axis of rotation arranged substantially horizontally and perpendicularly to the direction of movement along the treatment zone, travel through the treatment bath in this position and upon discharge from the treatment bath are rotated through 180° again about the axis of rotation.

24. Method according to claim 23,
**characterised in that** the vehicle bodies (22) additionally perform a pendulum movement when travelling through the treatment baths.

25. Method according to claims 23 to 24,
**characterised in that** the chassis units (20; 40; 60) are coupled to each other in the region of the treatment zone, by the fact that a chassis unit (20; 40; 60) which has been pivoted upwards in the region of the first transfer station (18) is connected in form-locking relationship to the adjacent chassis unit (20; 40; 60) located in the region of the treatment zone, and the form-locking connection is undone again when the adjacent chassis unit (20; 40; 60) in the region of the second transfer station (18) is pivoted downwards.

26. Method according to any of claims 20 to 25,
**characterised in that** the speed of transport of the chassis units (20; 40; 60) during return is higher than the average speed of the chassis units (20; 40; 60) in the region of the treatment zone.

27. Method according to any of claims 20 to 26,
**characterised in that** the rotational movement of the chassis units (20; 40; 60) is coupled to the translational movement of the chassis units (20; 40; 60).

28. Method according to any of claims 20 to 26,
**characterised in that** the rotational movement of the chassis units (20; 40; 60) is independent of the translational movement of the chassis units (20; 40; 60).

29. Method according to claim 28,
**characterised in that** the chassis units (20; 40; 60) in the region of the treatment zone are moved independently of each other in the direction of translation.

30. Method according to any of claims 20 to 27, further including making a releasable connection between a pulling device or driving device and a connecting device for the chassis unit (20; 40; 60) which is closest to the second transfer station in the region of the treatment zone, this chassis unit (20; 40; 60) being pulled by the pulling device or driving device to the second transfer station (18).

31. Method according to any of claims 20 to 27, further including making a connection between a pushing device and a row of chassis units (20; 40; 60) connected to each other, and pushing the chassis units (20; 40; 60) connected to each other in a direction towards the second transfer station (18).

## Revendications

1. Dispositif de traitement de pièces à usiner (22), en particulier de caisses de véhicule (22), en construction modulaire, avec
- un premier module, comprenant :
- un premier poste de transfert (18), coopérant avec un premier dispositif transporteur pour l'amenée des pièces à usiner (22) à traiter ;
- une voie de traitement (12) ;
- un dispositif de guidage (44) le long de la voie de traitement (12) ; ainsi que
- un deuxième poste de transfert (18), coopérant avec un deuxième dispositif de transport (46) pour l'évacuation des pièces à usiner (22) ayant été traitées, sachant que, dans le deuxième poste de transfert (18), les mécanismes de mouvement (20 ; 40 ; 60) sont pivotés d'un angle d'à peu près 90° autour d'un axe de pivotement (68), dans la zone du dispositif de guidage (44) et les mécanismes de mouvement sont ramenés par pivotement dans un sens de pivotement opposé de la même valeur angulaire dans le premier poste de transfert (18) ; et
- un deuxième module, comprenant un ou plusieurs mécanismes de mouvement (20 ; 40 ; 60), auxquels les pièces à usiner (20) sont susceptibles d'être fixées et sont susceptibles d'être déplacées le long du dispositif de guidage (44), **caractérisé en ce que**
la voie de traitement (12) présente une ou plusieurs zones de traitement (14) pour le traitement de surface des pièces à usiner et **en ce que** le au moins un mécanisme de mouvement (20, 40, 60) présente des moyens (32, 38, 42) pour assurer la rotation de la pièce à usiner (22), pour introduire ou extraire la pièce à usiner (22) dans ou hors de la au moins une zone de traitement (14).

2. Dispositif selon la revendication 1, **caractérisé en ce que** le dispositif de guidage (44) n'est disposé que sur un côté de la voie de traitement (12).

3. Dispositif selon la revendication 2, **caractérisé en ce que** le dispositif de guidage comprend au moins une glissière (44).

4. Dispositif selon la revendication 3, **caractérisé en ce que** les mécanismes de mouvement (20 ; 40 ; 60) présentent des rouleaux (30) roulant sur au moins une glissière (44) du dispositif de guidage.

5. Dispositif selon la revendication 1, **caractérisé en ce que** le premier module comprend en outre :
- un dispositif de rappel, de préférence réalisé sous la forme d'un transporteur à courroie (70) ou d'un transporteur à chaîne, pour transporter les mécanismes de mouvement du deuxième poste de transfert (18) au premier poste de transfert (18).

6. Dispositif selon la revendication 5, **caractérisé en ce que** le dispositif de rappel (70) présente un dispositif d'aiguillage pour l'introduction en circuit, ou l'extraction de circuit, de mécanismes de mouvement, à ou depuis une zone d'entretien.

7. Dispositif selon la revendication 1, **caractérisé en ce que** l'axe de pivotement (68) est disposé sensiblement parallèlement au dispositif de guidage (44) et sur le côté du dispositif de guidage (44) opposé à une ou plusieurs des zones de traitement (14).

8. Dispositif selon l'une des revendications précédentes, **caractérisé en ce que** les mécanismes de mouvement (20 ; 40 ; 60) et le dispositif de guidage (44) sont construits de manière que tous les emplacements de stockage lors du traitement des pièces à usiner (22) soient à tout moment disposées hors des unes ou plusieurs zones de traitement (14).

9. Dispositif selon l'une des revendications précédentes, **caractérisé en ce que** les mécanismes de mouvement (20 ; 40 ; 60) comprennent :
- un châssis extérieur (26) ; ainsi qu'
- un châssis intérieur (28), mobile en rotation autour d'un axe de rotation (32) par rapport au châssis extérieur, les pièces à usiner (22) étant susceptibles d'être fixées sur le châssis intérieur (28) ; où
- l'axe de rotation (32) de chaque mécanisme de mouvement est disposé sensiblement horizontalement ainsi que perpendiculairement à la direction de déplacement des mécanismes de mouvement (20 ; 40 ; 60) le long de la voie de traitement (12).

10. Dispositif selon la revendication 9, comprenant en outre :
- un dispositif pour lever et/ou placer obliquement l'axe de rotation (32) par rapport au châssis extérieur.

11. Dispositif selon la revendication 9 ou la revendication 10, dans la mesure où celles-ci se réfèrent à la revendication 5, **caractérisé en ce que** les mécanismes de mouvement (20 ; 40) sont susceptibles d'être accouplés dans la zone du premier poste de transfert (18) et sont susceptibles d'être désolidarisés les uns des autres dans la zone du deuxième poste de transfert (18).

12. Dispositif selon la revendication 11, **caractérisé en ce que** les châssis extérieurs (26) présentent des éléments d'accouplement avant (50a) et des éléments d'accouplement arrière (50b), configurés de manière que l'élément d'accouplement arrière (50b) de chaque mécanisme de mouvement (20 ; 40) puisse former une liaison à ajustement de formes, désolidarisable, avec l'élément d'accouplement avant (50a) d'un mécanisme de mouvement (20 ; 40) suivant.

13. Dispositif selon la revendication 11 ou selon la revendication 12, **caractérisé en ce que** les mécanismes de mouvement (20 ; 40) présentent un dispositif de liaison disposé dans la zone du châssis extérieur, de préférence un appendice en forme de crochet pour un dispositif tracteur (52).

14. Dispositif selon la revendication 13, **caractérisé en ce que** le dispositif tracteur (52) est disposé dans la zone du deuxième poste de transfert (18) ou un dispositif pousseur est disposé dans la zone du premier poste de transfert et est configuré pour former une liaison désolidarisable au dispositif de liaison (36) du mécanisme de mouvement (20 ; 40), qui se trouve le plus près du deuxième poste de transfert (18) dans la zone de la voie de traitement (12), sachant que ce mécanisme de mouvement est susceptible d'être transporté de façon forcée par le dispositif tracteur (52) au deuxième poste de transfert (18), ou bien la série de mécanismes de mouvement accouplés les uns aux autres est susceptible d'être transportée dans la direction du deuxième poste de transfert par le dispositif pousseur.

15. Dispositif selon l'une des revendications 9 à 14, **caractérisé en ce que** le deuxième module comprend en outre :
- un dispositif de commande (48 ; 48a ; 48b) dans la zone du dispositif de guidage (44), qui coopère avec les mécanismes de mouvement (20) pour commander un mouvement de rotation relatif entre le cadre extérieur (26) et le cadre intérieur (28), autour de l'axe de rotation (32).

16. Dispositif selon la revendication 15, **caractérisé en ce que** le dispositif de commande comprend une glissière de guidage (48) avec des tronçons de guidage (48a, 48b) inclinés, glissière coopérant avec un agencement à levier (38) relié de façon rigide en rotation au châssis intérieur (28).

17. Dispositif selon l'une des revendications 9 à 14, comprenant en outre sur chaque mécanisme de mouvement un entraînement en rotation (42) relié, côté sortie, de façon rigide en rotation au châssis intérieur (28) des mécanismes de mouvement (40 ; 60).

18. Dispositif selon la revendication 9 ou la revendication 10, **caractérisé en ce que** les mécanismes de mouvement (60) comprennent :
- un entraînement en translation (64), pour produire un déplacement en translation des mécanismes de mouvement (60) le long de la voie de traitement (12) ; et
- un entraînement en rotation (42), pour produire un déplacement en rotation du châssis intérieur (28) par rapport au châssis extérieur (26) ; où
- le déplacement en translation est indépendant du déplacement en rotation.

19. Dispositif selon la revendication 17 ou la revendication 18, **caractérisé en ce que** la transmission d'information et/ou la transmission d'énergie d'un premier module aux mécanismes de mouvement se fait sans contact, en particulier de façon inductive.

20. Procédé de traitement de pièces à usiner (22), en particulier de caisses de véhicule (22), dans un dispositif avec une voie de traitement (12) comprenant une ou plusieurs zones de traitement pour le traitement de surface des caisses à usiner (22), les pièces à usiner (22) étant fixées sur des mécanismes de mouvement (20; 40; 60) déplacés le long de la voie de traitement (12), comprenant les étapes consistant à :
- effectuer un transport d'approche d'une pièce d'oeuvre (22) à un premier poste de transfert (18), au moyen du premier dispositif de transport ;
- effectuer une levée par pivotement d'un mécanisme de mouvement autour d'un axe de pivotement (68), jusqu'à ce que le mécanisme de mouvement (20 ; 40 ; 60) maintienne la pièce d'oeuvre (22) ;
- parcourir la voie de traitement jusqu'à un deuxième poste de transfert (18) avec un mouvement rotatif par tronçon supplémentaire pour obtenir l'introduction ou l'extraction de la pièce à usiner (22) dans ou hors d'une ou plusieurs zones de traitement ;
- abaisser par pivotement le mécanisme de mouvement (20 ; 40 ; 60) autour de l'axe de pivotement (68) dans la zone du deuxième poste de transfert (18) ; et simultanément
- effectuer le transport d'évacuation de la pièce à usiner (22) par un deuxième dispositif de transport (46);
- effectuer le transport de retour des mécanismes de mouvement (20 ; 40 ; 60) ayant été pivotés d'à peu près 90° depuis l'horizontale, pour revenir au premier poste de transfert (18).

21. Procédé selon la revendication 20, **caractérisé en ce que**, dans le deuxième poste de transfert (18), les mécanismes de mouvement (20 ; 40 ; 60) sont pivotés d'un angle d'à peu près 90° autour d'un axe de pivotement (68) dans la zone du dispositif de guidage et, dans le premier poste de transfert (18), les mécanismes de mouvement sont ramenés par pivotement dans un sens de pivotement opposé et de la même valeur angulaire.

22. Procédé selon la revendication 21, **caractérisé en ce que** l'axe de pivotement (68) est disposé sensiblement parallèlement au dispositif de guidage (44) et sur le côté du dispositif de guidage (44) opposé à une ou plusieurs des zones de traitement.

23. Procédé selon l'une des revendications 20 à 22, **caractérisé en ce que** les pièces à usiner sont des caisses de véhicule (22) plongées dans des bains de traitement, les caisses de véhicule, lors de l'immersion dans un bain de traitement, étant tournées de 180° autour d'un axe de rotation sensiblement horizontal et disposées perpendiculairement par rapport à la direction de déplacement, le long de la voie de traitement, le bain de traitement étant parcouru à cette position et, lors de l'extraction du bain de traitement, les caisses de véhicule étant de nouveau tournées de 180° autour de l'axe de rotation.

24. Procédé selon la revendication 23, **caractérisé en ce que**, lors du passage dans les bains de traitement, les caisses de véhicule (22) effectuent en plus un mouvement pendulaire.

25. Procédé selon les revendications 23 à 24, **caractérisé en ce que** dans les mécanismes de mouvement (20 ; 40 ; 60) sont accouplés les uns aux autres dans la zone de la voie de traitement, **en ce qu'**un mécanisme de mouvement (20 ; 40 ; 60) ayant été relevé par pivotement dans la zone du premier poste de transfert (18) est relié par liaison à ajustement de formes aux mécanismes de mouvement (20 ; 40 ; 60) voisins se trouvant dans la zone de la voie de traitement, et la liaison par ajustement de formes étant de nouveau coupée lorsque le mécanisme de mouvement (20 ; 40 ; 60) voisin est rabaissé par pivotement dans la zone de deuxième poste de transfert (18).

26. Procédé selon l'une des revendications 20 à 25, **caractérisé en ce que** dans la vitesse de transport des mécanismes de mouvement (20 ; 40 ; 60) lors du transport de retour est plus élevée que la vitesse moyenne des mécanismes de mouvement (20 ; 40 ; 60) dans la zone de la voie de traitement.

27. Procédé selon l'une des revendications 20 à 26, **caractérisé en ce que** le mouvement de rotation des mécanismes de mouvement (20 ; 40 ; 60) est couplé au mouvement de translation des mécanismes de mouvement (20 ; 40 ; 60).

28. Procédé selon l'une des revendications 20 à 26, **caractérisé en ce que** le mouvement de rotation des mécanismes de mouvement (20 ; 40 ; 60) est indépendant du déplacement en translation des mécanismes de mouvement (20 ; 40 ; 60).

29. Procédé selon la revendication 28, **caractérisé en ce que**, dans la zone de la voie de traitement, les mécanismes de mouvement (20 ; 40 ; 60) sont déplacés dans la direction de translation, indépendamment les uns des autres.

30. Procédé selon l'une des revendications 20 à 27, comprenant en outre l'établissement d'une liaison désolidarisable entre un dispositif tracteur ou un dispositif d'entraînement et un dispositif de liaison du mécanisme de mouvement (20 ; 40 ; 60), qui se trouve le plus près du deuxième poste de transfert dans la zone de la voie de traitement, ce mécanisme de mouvement (20 ; 40 ; 60) étant tiré vers le deuxième poste de transfert (18) par le dispositif tracteur ou le dispositif d'entraînement.

31. Procédé selon l'une des revendications 20 à 27, comprenant en outre l'établissement d'une liaison entre un dispositif pousseur et une série de mécanismes de mouvement (20 ; 40 ; 60) reliés ensemble, et la poussée des mécanismes de mouvement (20 ; 40 ; 60) reliés ensemble dans la direction du deuxième poste de transfert (18).
